(19) Europäisches Patentamt
European Patent Office
Office européen des brevets

(11) **EP 4 275 099 B1**

(12) **EUROPÄISCHE PATENTSCHRIFT**

(45) Veröffentlichungstag und Bekanntmachung des Hinweises auf die Patenterteilung:
**28.08.2024 Patentblatt 2024/35**

(21) Anmeldenummer: **22717173.3**

(22) Anmeldetag: **23.03.2022**

(51) Internationale Patentklassifikation (IPC):
**G05B 23/02** *(2006.01)* **G05B 19/404** *(2006.01)*

(52) Gemeinsame Patentklassifikation (CPC):
**G05B 19/404;** G05B 23/0294; G05B 2219/41154; G05B 2219/41161; G05B 2219/41163; G05B 2219/49181

(86) Internationale Anmeldenummer:
**PCT/EP2022/057646**

(87) Internationale Veröffentlichungsnummer:
**WO 2022/207431 (06.10.2022 Gazette 2022/40)**

(54) **VERFAHREN UND SYSTEME ZUM ERMITTELN VON KOMPENSATIONSPARAMETERN**

METHOD AND SYSTEMS FOR IDENTIFYING COMPENSATION PARAMETERS

PROCÉDÉ ET SYSTÈMES DE DÉTERMINATION DES PARAMÈTRES DE COMPENSATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.03.2021 EP 21165783**

(43) Veröffentlichungstag der Anmeldung:
**15.11.2023 Patentblatt 2023/46**

(73) Patentinhaber: **Siemens Aktiengesellschaft 80333 München (DE)**

(72) Erfinder:
• **POPP, Johannes**
  **91054 Erlangen (DE)**
• **SCHÄFERS, Elmar**
  **90763 Fürth (DE)**

(74) Vertreter: **Siemens Patent Attorneys Postfach 22 16 34 80506 München (DE)**

(56) Entgegenhaltungen:
**US-A1- 2019 317 472 US-B2- 6 865 499**

EP 4 275 099 B1

**Beschreibung**

Die Erfindung betrifft ein Verfahren zum Ermitteln von Kompensationsparametern, wobei die Kompensationsparameter ein (von mehreren Kompensationsparametern abhängiges) Kompensationssignal festlegen, wobei das Kompensationssignal dazu vorgesehen ist, zumindest eine Störung zu kompensieren, wobei die zumindest eine Störung im Betrieb eines Regelziels aufgrund eines Reibeffekts vorzugsweise deterministisch auftritt, wobei das Regelziel, das z.B. eine Achse einer Werkzeugmaschine umfasst, im Betrieb von einer Servoantrieb-Regeleinrichtung geregelt wird, wobei der Reibeffekt im Betrieb an zumindest einem Umkehrpunkt einer servogetriebenen Achse des Regelziels auftritt, wobei die Servoantrieb-Regeleinrichtung dazu eingerichtet ist, beim Auftreten der zumindest einen Störung anhand der (mehreren) Kompensationsparameter das Kompensationssignal zu generieren, um einen auf die Störung zurückzuführenden Folgefehler zu reduzieren.

Darüber hinaus betrifft die Erfindung ein Verfahren zur Überwachung eines Regelziels.

Ferner betrifft die Erfindung ein System zur Ausführung der vorgenannten Verfahren.

Außerdem betrifft die Erfindung ein Computerprogramm mit den Befehlen, die bewirken, dass das vorgenannte System eines oder beide der vorgenannten Verfahren ausführt.

Obendrein betrifft die Erfindung ein computerlesbares Medium, auf dem das vorgenannte Computerprogramm gespeichert ist.

Verfahren und Systeme, bei welchen eine Kompensation bei einer Abweichung zwischen Soll- und Ist-Werten ausgelöst wird, sind hinlänglich bekannt. Tritt eine solche Abweichung auf, generiert die Servoantrieb-Regeleinrichtung typischerweise ein Kompensationssignal, welches auf ein Soll-Signal aufgeschaltet wird, um den Fehler zu kompensieren.

Im Zusammenhang mit der vorliegenden Erfindung wird unter dem Begriff Störung eine Störung verstanden, die auf einen physikalischen Effekt vorzugsweise innerhalb des Regelziels zurückzuführen ist. Mit anderen Worten handelt es sich hierbei um die regelzielsinneren Störungen physikalischen Ursprungs.

Z.B. wird Die Positioniergenauigkeit von Maschinen-Vorschubachsen (insbesondere Werkzeug-, Bearbeitungs- und Produktionsmaschinen) durch Reibung, z.B. am Antriebsstrang oder in den Führungen der bewegten Komponenten, verschlechtert. Vor allem an Positions-Umkehrpunkten entstehen vergleichsweise große Abweichungen zwischen Soll- und Ist-Position. Dies stellt gerade bei Maschinen im Werkzeugformenbau bspw. für Kunststoffspritzguss- oder Aluminiumdruckguss-Werkzeuge ein zentrales Problem dar. Aus diesem Grund beinhaltet die Sollwert-Generierung von NC-Steuerungen für die am Bearbeitungsprozess beteiligten Maschinenachsen einen Mechanismus zur Kompensation der an den Umkehrpunkten auftretenden Reibeffekte. Dieser Mechanismus kann durch den Geschwindigkeitsnulldurchgang des Soll- oder Istsignals ausgelöst werden und führt zur Aufschaltung eines zusätzlichen Kompensationssignals auf den Drehzahl-Sollwert.

Die mit dem durch die Kompensationsparameter festgelegten Kompensationsverlauf erreichbare Positioniergüte hängt wesentlich von der geeigneten Wahl der Parameter ab. Die für eine optimale Kompensationsgüte zu wählenden Parameter sind dabei Maschinen- und Achs-abhängig und unterscheiden sich üblicherweise an Umkehrpunkten mit positiver und negativer Beschleunigung ("oberer" und "unterer" Umkehrpunkt). Zudem hängt die optimale Wahl der Parameter üblicherweise vom Beschleunigungsniveau während der Richtungsumkehr ab.

Die Abhängigkeit vom Beschleunigungsniveau kann hierbei durch eine lineare Interpolation zwischen frei wählbaren beschleunigungsbezogenen Stützstellen für die (Kompensations-)Parameter realisiert werden.

Es steht somit fest, dass für eine einzelne Achse eine Vielzahl an Parametern für unterschiedliche Beschleunigungsniveaus an den beiden Umkehrpunkten zu bestimmen ist. Bei einer Maschine mit fünf Antriebsachsen und der Wahl von sechs Wertepaaren für die beschleunigungsabhängige Interpolation sind beispielsweise insgesamt 60 Parametersätze zu bestimmen, was bei Verwendung vorhandener Parametrierungs-Methoden zu einer hohen, von Kunden nicht akzeptierten Inbetriebnahme-Dauer führt.

Außerdem setzen die heute implementierten Methoden zur Kompensation von Reibung zunächst voraus, dass die Reibung über das Maschinenleben konstant ist. Ändert sich die Reibung - z.B. durch Einlaufen von Führungsschienen - ist ein manueller Eingriff erforderlich.

Aus dem Stand der Technik sind beispielsweise Methoden zur manuellen Parametrierung durch Beobachtung des Folgefehlers an einem Kreisformtest (siehe DE 198 41 716 A1) und einer heuristischen Trial-and-Error-Vorgehensweise bekannt. Bei diesem Ansatz ist ein erfahrener Inbetriebnehmer notwendig, der durch Beobachtung des Folgefehlers zwischen Soll- und Ist-Position, bspw. während der Sinus-förmigen Bewegung einer einzelnen Achse (Kreisformtest), eine iterative Anpassung der Parameter vornimmt. In der Praxis ist ein qualitativer Zusammenhang zwischen den einzelnen Parametern des Parameter-Satzes und dem sich ergebenden Folgefehler bekannt, auf dessen sich ein heuristisches Trial-and-Error-Vorgehen etabliert hat.

Als wesentliche Nachteile dieses Ansatzes sind zu nennen:

- Erfahrener Inbetriebnahme-Techniker notwendig
- Lange Inbetriebnahme-Dauer.

Wird ein solches Verfahren automatisiert, bleibt das Problem der langen Inbetriebnahme-Dauer bestehen.

Aus der US 6 865 499 B2 ist ein Verfahren und eine Maschine für Abstimmung von Kompensationsparametern in einem Bewegungssteuerungssystem in Verbindung mit einem mechanischen Bauteil bekannt. Das Verfahren umfasst folgende Schritte. Empfangen einer Angabe eines zu testenden Kompensationsparameters; basierend auf dem zu testenden Kompensationsparameter des, Veranlassen eines Signals, das eine gewünschte Bewegung des mechanischen Bauteils anzuordnen hat; Erfassen von dem Signal dazugehörigen Steuerdaten; Erfassen von Messdaten, die mit der tatsächlichen Bewegung des mechanischen Glieds in Reaktion auf das Signal assoziiert sind; Analysieren der Steuer- und Messdaten; und Implementieren eines Werts des Kompensationsparameters, basierend auf dem Schritt des Analysierens der Steuer- und Messdaten.

Die objektive technische Aufgabe der vorliegenden Erfindung kann somit darin gesehen werden, Verfahren und Systeme zur schnelleren und effizienteren Ermittlung von Kompensationsparametern zum Kompensieren von aus der im Betrieb an zumindest einem Umkehrpunkt einer servogetriebenen Achse eines Regelziels auftretenden Reibung hervorgehenden Störungen - Reibkompensationsparametern - bereitzustellen, die eine automatisierte und schnelle Ermittlung der Reibkompensationsparameter ermöglichen und dadurch die Inbetriebnahme vereinfachen und die für die Inbetriebnahme notwendige Zeit verkürzen. Darüber hinaus kann dadurch unterschiedlichen Beschleunigungsniveaus an den unterschiedlichen Umkehrpunkten Rechnung getragen werden.

Die Aufgabe wird mit dem eingangs genannten Verfahren erfindungsgemäß dadurch gelöst, dass ein erster Testparametersatz bereitgestellt wird; die Servoantrieb-Regeleinrichtung veranlasst wird, einen Betriebsvorgang, bei dem die zumindest eine Störung auftritt, durchzuführen, wobei die Servoantrieb-Regeleinrichtung bei dem Durchführen des Betriebsvorgangs basierend auf dem ersten Testparametersatz ein erstes (von mehreren Parametern abhängiges) Test-Kompensationssignal generiert und ein erstes Messsignal als Rückmeldung (von dem Regelziel) erhält; aus dem ersten Messsignal ein erstes Fehlersignal ermittelt wird; die Kompensationsparameter mittels eines Ersatzmodells, wobei das Ersatzmodell Fehlersignale auf Kompensationssignale abbildet, und unter Verwendung des ersten Fehlersignals ermittelt werden.

Daraus, dass ein erster Testparametersatz (vorzugsweise aus zwei oder mehr Parametern) bereitgestellt wird und am Schluss die Kompensationsparameter ermittelt werden, folgt, dass es möglich ist, gleichzeitig mehrere Kompensationsparameter zu ermitteln. Dadurch ist es möglich, deutlich komplexeres Kompensationssignale zu verwenden, die z.B. einer Totzeit und/oder einer Haltezeit Rechnung tragen, d.h. bei den diese Größen durch Hinzunahme entsprechender Parameter berücksichtigt werden können.

Bei einer Ausführungsform kann vorgesehen sein, dass beim Ermitteln des ersten Fehlersignals Sollwerte verwendet werden, wobei die Sollwerte durch den Betriebsvorgang festgelegt sind.

Bei einer Ausführungsform kann vorgesehen sein, dass die Kompensationsparameter anhand eines durch das Ersatzmodell auf ein Kompensationssignal abgebildeten ersten Fehlersignals - eines Ersatz-Kompensationssignals - bestimmt/ermittelt werden. Dabei kann beispielsweise eine Differenz zwischen einem Kompensationsverlauf und dem Ersatz-Kompensationssignal minimiert werden, wobei der Kompensationsverlauf als Minimierungsvariable verwendet wird. D.h. der Kompensationsverlauf wird variiert, um das Minimum zu erreichen. Mit anderen Worten wird dabei die aus einem beliebigen bzw. variierbaren Kompensationssignal (dem Kompensationsverlauf) und dem Ersatz-Kompensationssignal gebildete Differenz durch Variieren der das beliebige Kompensationssignal festlegenden/definierenden Parameter minimiert. Die Ermittlung der Kompensationsparameter ist dabei sehr einfach und sehr schnell.

Das Ersatzmodell modelliert beispielsweise das Verhalten der Servoantrieb-Regeleinrichtung und des Regelziels. Beispielsweise kann das Ersatzmodell als Modell eines geschlossenen Regelkreises, z.B. eines Lageregelkreises ausgebildet sein.

Bei einer Ausführungsform kann vorgesehen sein, dass der erste Testparametersatz aus Kompensationsparametern besteht, die alle gleich null sind (erster Testlauf: ohne Kompensation).

Bei einer Ausführungsform kann vorgesehen sein, dass ferner ein zweiter Testparametersatz (aus mehreren Parametern) bereitgestellt wird; die Servoantrieb-Regeleinrichtung veranlasst wird, den Betriebsvorgang zu wiederholen, wobei die Servoantrieb-Regeleinrichtung bei dem Wiederholen des Betriebsvorgangs basierend auf dem zweiten Testparametersatz ein zweites Test-Kompensationssignal generiert, wobei sich das zweite Test-Kompensationssignal von dem Test-Kompensationssignal unterscheidet, und als Rückmeldung ein zweites Messsignal erhält; aus dem zweiten Messsignal ein zweites Fehlersignal ermittelt wird; auf Basis von den Test-Kompensationssignalen und den Messsignalen ein Übertragungsverhaltensmodell ermittelt bzw. generiert bzw. erstellt wird, wobei das Übertragungsverhaltensmodell ein Übertragungsverhalten zwischen Kompensations- (Input/Eingang) und Fehlersignalen (Output/Ausgang) simuliert, d.h. Kompensationssignale (Input/Eingang des Übertragungsverhaltensmodells) auf Fehlersignale (Output/Ausgang) abbildet; die Kompensationsparameter anhand des Übertragungsverhaltensmodells ermittelt werden.

Da das Übertragungsverhaltensmodell den allgemeinen Zusammenhang zwischen einem Eingangs- und einem Ausgangssignal kann, handelt es sich um ein dynamisches System bzw. Modell, welches eine Vorausberechnung eines Outputs infolge eines Inputs.

Bei einer Ausführungsform kann vorgesehen sein, dass beim Ermitteln der Kompensationsparameter anhand des Übertragungsverhaltensmodells eine Optimierung, insbesondere eine Minimierung eines auf ein vorgegebenes Fehlersignal und auf ein mittels des Übertragungsverhaltensmodells simuliertes Fehlersignal bezogenen Gütewerts erfolgt. Außerdem kann es zweckmäßig sein, wenn die Optimierung vorzugsweise die Minimierung durch Variieren von Parametern erfolgt, welche Parameter ein (Kompensations-)Signal festlegen, welches Signal als Eingang für das Übertragungsverhaltensmodell verwendet wird, um das simulierte Signal (simuliertes Fehlersignal) zu generieren.

Durch die Optimierung wird angestrebt, das simulierte (Fehler-)Signal mit dem vorgegebenen Fehlersignal in Deckung zu bringen. Das vorgegebene Fehlersignal wird vorzugsweise während der Optimierung nicht verändert.

Bei einer Ausführungsform kann vorgesehen sein, dass das vorgegebene Fehlersignal das erste Fehlersignal ist.

Bei einer Ausführungsform kann vorgesehen sein, dass das vorgegebene Fehlersignal das zweite Fehlersignal ist.

Bei einer Ausführungsform kann vorgesehen sein, dass eine p-Norm mit $p \in \mathbb{R}$, $p \geq 1$ als Gütewert verwendet wird.

Bei einer Ausführungsform kann vorgesehen sein, dass der zweite Testparametersatz die anhand des Ersatzmodells bestimmten Kompensationsparameter umfasst, vorzugsweise aus den anhand des Ersatzmodells bestimmten Kompensationsparametern besteht, sodass das zweite Test-Kompensationssignal gleich einem auf den anhand des Ersatzmodells bestimmten Kompensationsparametern basierenden Kompensationssignal ist.

Bei einer Ausführungsform kann es zweckdienlich sein, wenn die Servoantrieb-Regeleinrichtung veranlasst wird, den Betriebsvorgang ein weiteres Mal durchzuführen, wobei die Servoantrieb-Regeleinrichtung das Kompensationssignal basierend auf den (mehreren) anhand des Übertragungsverhaltensmodells ermittelten Kompensationsparametern generiert und als Rückmeldung ein drittes Messsignal erhält, wobei basierend auf dem dritten Messsignal ein drittes Folgefehler ermittelt wird, wobei das erste, das zweite und das dritte Fehlersignale verglichen werden, um jene Kompensationsparameter zu wählen, welche zu dem geringsten Fehlersignal führen.

Bei einer Ausführungsform kann vorgesehen sein, dass das Fehlersignal ein Lage- bzw. Positions- oder Geschwindigkeitsfehlersignal ist.

Bei einer Ausführungsform kann vorgesehen sein, dass das Regelziel als eine Werkzeug-, Bearbeitungs- oder Produktionsmaschine ausgebildet ist.

Bei einer Ausführungsform kann vorgesehen sein, dass die Störung durch einen Reibeffekt hervorgerufen wird, wobei der Reibeffekt im Betrieb an zumindest einem Umkehrpunkt einer servogetriebenen/servoantreibbaren Achse des Regelziels auftritt.

Das Regelziel kann außerdem einen Motor (z.B. Servoantrieb) umfassen, der die Achse antreibt.

Bei einer Ausführungsform kann vorgesehen sein, dass die Kompensationsparameter abhängig von der Achsstellung des Regelziels ermittelt werden.

Bei einer Ausführungsform kann vorgesehen sein, dass die Achse eine Vorschub- oder Rotationsachse ist. Weitere Typen von Achsen sind denkbar: Rotationsachsen mit Getriebe, Rotationsachsen mit Torquemotor, Translatorische Vorschubachsen mit Linearmotor, Translatorische Vorschubachsen mit Kugelgewindetrieb und einem oder mehreren Rotationsmotoren, Translatorische Vorschubachsen mit Ritzel/Zahnstange-Übersetzung und einem oder mehreren Rotationsmotoren.

Bei einer Ausführungsform kann vorgesehen sein, dass der zumindest eine Umkehrpunkt ein Positions-Umkehrpunkt ist.

Bei einer Ausführungsform kann vorgesehen sein, dass die Servoantrieb-Regeleinrichtung eine NC-Steuerung-Einheit und eine Servoantrieb-Einheit umfasst.

Die Aufgabe wird außerdem erfindungsgemäß mit einem Verfahren dadurch gelöst, dass bei dem Verfahren ein Regelziel überwacht wird, wobei das Regelziel im Betrieb von einer Servoantrieb-Regeleinrichtung geregelt wird, wobei die Servoantrieb-Regeleinrichtung dazu eingerichtet ist, beim Auftreten einer Störung in dem Regelziel anhand von Kompensationsparametern ein Kompensationssignal zu generieren, um die Störung zu kompensieren, wobei während der Überwachung das vorgenannte Verfahren zur Ermittlung von Kompensationsparametern ereignisgetriggert und/oder in periodischen Zeitabständen ausgeführt wird, um optimierte Kompensationsparameter zu ermitteln, die optimierten Kompensationsparameter mit den Kompensationsparametern verglichen werden, beim Vorliegen einer einen vordefinierten Wert übersteigenden Abweichung der Kompensationsparameter von den optimierten Kompensationsparametern eine Warnung ausgegeben wird.

Dieses Verfahren lässt sich nutzen, um z.B. eine regelmäßige Adaption an sich ändernde Reibverhältnisse zu erreichen.

Bei einer Ausführungsform kann vorgesehen sein, dass das Verfahren ein Verschleißanalyse-Verfahren, eine Wartung, vorzugsweise eine zustandsorientierte Wartung oder Condition-Monitoring-Verfahren ist.

Bei einer Ausführungsform kann vorgesehen sein, dass beim Vorliegen einer einen vordefinierten Wert übersteigenden Abweichung der Kompensationsparameter von den optimierten Kompensationsparametern die optimierten Kompensationsparameter z.B. von der Servoantrieb-Regeleinrichtung übernommen werden, beispielsweise um Kompensation aufgrund der optimierten Kompensationsparameter auszuführen.

Bei einer Ausführungsform kann vorgesehen sein, dass das Ausführen des Verfahrens zur Ermittlung der Kombinationsparameter bei einem Nicht-Mehr-Erfüllen eines definierten Qualitätskriteriums, beispielsweise beim Übersteigen eines vorbestimmten Werts durch eine Soll-Ist-Wert-Abweichung an Umkehrpunkten bei Referenzfahrten (z.B. Kreisformtest) oder bei regulärem Maschinen-Betrieb, ausgelöst wird.

Bei einer Ausführungsform kann vorgesehen sein, dass, wenn die optimierten Parameter übernommen werden, eine Meldung ausgegeben wird.

Außerdem wird die Aufgabe mit einem System erfindungsgemäß dadurch gelöst, dass das System eine Servoantrieb-Regeleinrichtung, ein Regelziel und eine Recheneinrichtung umfasst, wobei das Regelziel im Betrieb von der Servoantrieb-Regeleinrichtung geregelt wird, wobei im Betrieb des Regelziels (in dem Regelziel) zumindest eine Störung auftritt, wobei die Servoantrieb-Regeleinrichtung dazu eingerichtet ist, beim Auftreten der zumindest einen Störung ein Kompensationssignal zu generieren, um die zumindest eine Störung zu kompensieren, wobei das Kompensationssignal durch Kompensationsparameter definiert ist, wobei die Recheneinrichtung dazu konfiguriert ist, um das vorgenannte Verfahren zur Ermittlung der Kompensationsparameter oder das vorgenannte Verfahren zur Überwachung des Regelziels auszuführen.

Bei einer Ausführungsform kann vorgesehen sein, dass die Recheneinrichtung einen maschinenlesbaren, z.B. flüchtigen oder nicht-flüchtigen Speicher, auf dem maschinenausführbare Komponenten gespeichert werden können, und einen mit dem maschinenlesbaren Speicher operativ gekoppelten Prozessor umfasst, der dazu konfiguriert ist, die maschinenausführbaren Komponenten auszuführen.

Bei einer Ausführungsform kann vorgesehen sein, dass die Servoantrieb-Regeleinrichtung die Recheneinrichtung umfasst.

Die vorgenannten Verfahren und Systeme führen zu deutlich geringerem Zeitaufwand bei der Bestimmung der Kompensationsparameter. Die Zeitersparnis liegt u.a. daran, dass die Kompensationsparameter anhand mathematischer System-Modelle generiert werden und dafür wenige reale Messungen notwendig sind.

Die Zeitersparnis liegt unter anderem daran, dass die Kompensationsparameter anhand mathematischer System-Modelle anstelle realer Messungen ermittelt werden.

Bei den vorgenannten Verfahren kann der Parametersatz solange iteriert werden, bis sich ein zufriedenstellender Fehlerverlauf ergibt. Bei Verfahren nach dem Stand der Technik muss dafür für jeden Parametersatz eine reale Messung mit der Dauer einer Sinusperiode durchgeführt werden. Vor allem bei Sollsignalen mit hoher Periodendauer dauert dies sehr lange. Bei einer Periodendauer von 30 Sekunden dauert die Messung demnach mindestens 30 Sekunden. Die Anzahl der Parametersätze steigt rasant mit der Anzahl der Achsen.

Wie oben beschrieben, ist dabei 60 Parametersätze keine große Zahl.

Beim vorgenannten Verfahren wird die reale Messung durch die Simulation ersetzt. Diese erfolgt virtuell, z.B. auf einem Microcontroller und ist in wenigen Milli-Sekunden abgeschlossen.

Im Folgenden wird die Erfindung anhand der in den Figuren dargestellten Ausführungsbeispiele näher beschrieben und erläutert. Es zeigen:

FIG 1    eine Regelstruktur einer Maschinenachse,
FIG 2    ein Beispiel für Kompensationsverlauf für eine Linearachse,
FIG 3    eine Systemarchitektur mit einer der Servoantrieb-Regeleinrichtung zugeordneten Recheneinrichtung zur Bestimmung von Kompensationsparametern,
FIG 4    ein Flussdiagramm eines Verfahrens,
FIG 5    ein Ersatzmodell des geschlossenen Lageregelkreises,
FIG 6    ein Übertragungsverhaltensmodell
FIG 7    einen Vergleich verschiedener Kompensationssignale, und
FIG 8    einen Algorithmus für Zustandsabhängige Wartung und/oder Adaption an geändertes Systemverhalten.

In den Ausführungsbeispielen und Figuren können gleiche oder gleiche Elemente jeweils mit den gleichen Bezugszeichen versehen sein. Bei den zeitabhängigen Signalen können natürlich die Zeitverläufe unterschiedlich sein, obwohl die Signale mit gleichen Bezugszeichen versehen sind. Außerdem dienen die Bezugszeichen in den Ansprüchen und in der Beschreibung lediglich zu einem besseren Verständnis der vorliegenden Anmeldung und sollen auf gar keinen Fall als eine Beschränkung des Gegenstands der vorliegenden Erfindung angesehen werden.

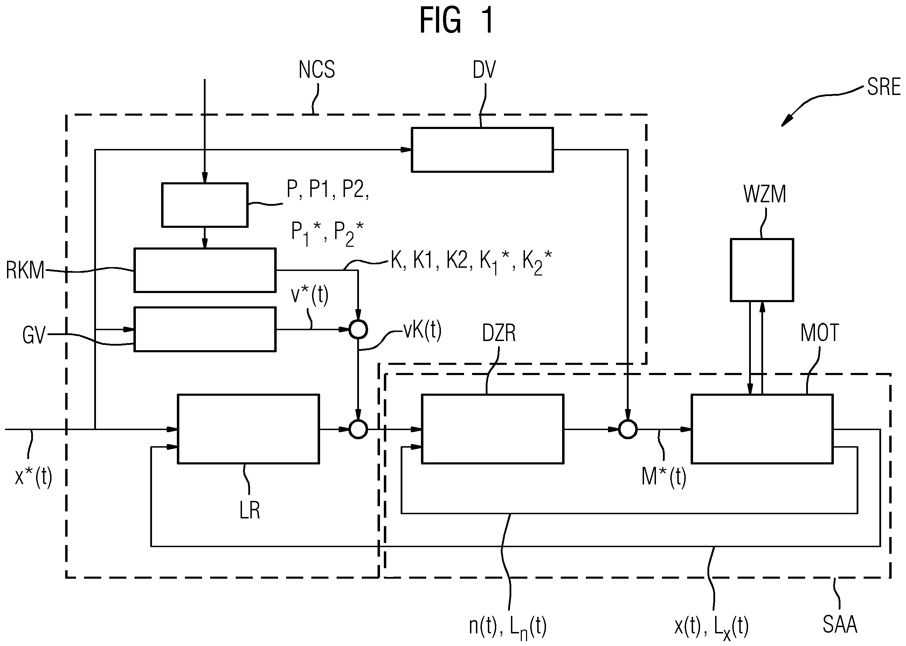

FIG 1 zeigt eine beispielhafte Regelstruktur einer Maschinenachse, beispielsweise einer Linearachse, insbesondere einer lagegeregelten Vorschub-Achse einer Werkzeugmaschine WZM. FIG 1 lässt eine NC-Steuerung NCS und eine Servo-Achs-Antriebseinheit SAA erkennen, die gemeinsam eine Servoantrieb-Regeleinrichtung SRE bilden, die einer erfindungsgemäßen Servoantrieb-Regeleinrichtung entsprechen kann.

Die Achse der Werkzeugmaschine WZM wird somit im Betrieb von der Servoantrieb-Regeleinrichtung SRE geregelt.

Die NC-Steuerung NCS kann beispielsweise einen Lageregler LR, eine Geschwindigkeitsvorsteuerung GV, ein Reibkompensationsmodul RKM und eine Drehmomentvorsteuerung DV umfassen. Ein Soll-Position-Signal x*(t), welches beispielsweise eine Durchfahrt der beiden Umkehrpunkte der Vorschub-Achse verursacht (die Größe t bezeichnet die Zeit als freie Variable), kann dem Lageregler LR, der Geschwindigkeitsvorsteuerung GV und der Drehmomentvorsteuerung DV zugeführt

Es kann beispielsweise ein Sinus-förmiges Positions-Soll-Signal $x^*(t) = Samp \cdot sin(2\pi t / STperi)$ herangezogen werden, wobei bspw. $Txsoll = 1,25 \cdot STperi$ ist. Dabei ist die Variable $Samp$ die Amplitude und $STperi$ die Periodendauer der Sinus-Bewegung.

Dem Reibkompensationsmodul RKM können unterschiedliche Kompensationsparameter beispielsweise in Form von Kompensationsparametersätzen P, P1, P2, P1*, P2* zugeführt, die verschiedene Kompensationssignale K, K1, K2, K1*, K2* definieren.

Das Reibkompensationsmodul RKM ist vorgesehen, um Kompensationssignale K, K1, K2, K1*, K2* generieren, die zur Kompensation der aufgrund von Reibeffekten auftretenden Störungen - kurz Reibkompensation - verwendet werden. Es versteht sich, dass die Kompensationssignale K, K1, K2, K1*, K2* im Allgemeinen zeitabhängig sind, also eine Funktion von Zeit f(t) sind.

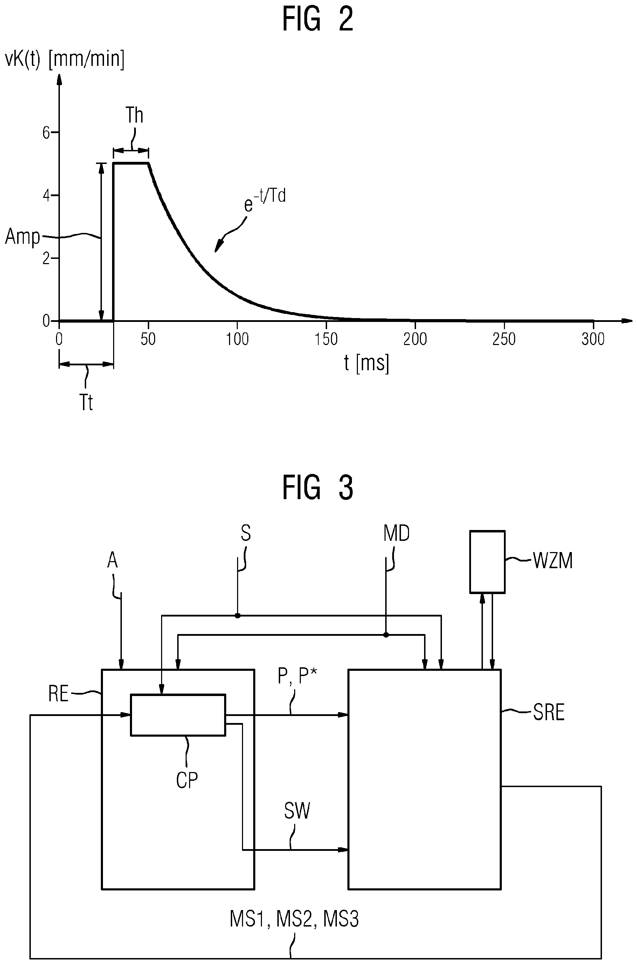

An dieser Stelle sei auf FIG 2 Bezug genommen, die ein Beispiel eines Kompensationssignals K illustriert, das bei Störungen an einer Achse, beispielsweise an einer lagegeregelten, insbesondere translatorischen Vorschub-Achse der Werkzeugmaschine WZM angewandt werden kann. Die Achse kann beispielsweise eine (im Betrieb der Werkzeugmaschine WZM) servogetriebene Linearachse sein. Die Störung kann beispielsweise durch Reibeffekte verursacht werden, die an den Umkehrpunkten der Achse, also dort, wo die Geschwindigkeit ihr Vorzeichen ändert, vorzugsweise deterministisch auftritt. Bei dem in FIG 2 gezeigten Kompensationssignal K(t) kann sich also um ein Kompensationssignal handeln, das zum Kompensieren der aufgrund der Reibeffekte auftretenden Fehler (z.B. Positions- und/oder Drehzahl- und/oder Geschwindigkeitsfehler an den Achs-Umkehrpunkten) vorgesehen ist. Das Kompensationssignal K hängt in diesem Beispiel von insgesamt vier Parametern ab: Verzögerungszeit Tt, Haltezeit Th, Abklingzeit Td, und Maximalwert der Kompensation Amp.

Beispielsweise kann das Kompensationssignal derart generiert werden, dass t=0 einem der Umkehrpunkte bzgl. deren Sollwerten (also v*(t)) entspricht. Dabei wird v*(t) beobachtet und der Zeitpunkt bei dem v*(t) das Vorzeichen von plus auf minus wechselt, ist der Null-Zeitpunkt für den Kompensationsverlauf. Bei Umschaltung von minus nach plus kann der Geschwindigkeits-Kompensationsverlauf K(t) so aufgeschaltet werden, dass K ein positives Vorzeichen hat. Bei der Umschaltung von v*(t) von plus nach minus kann K ein negatives Vorzeichen aufweisen.

Die Geschwindigkeitsvorsteuerung GV kann ein Soll-Geschwindigkeit-Signal v*(t) erzeugen, auf welches das Kompensationssignal K, K1, K2, K1* oder K2* aufgeschaltet beziehungsweise addiert werden kann, wodurch ein Signal vK(t) erzeugt wird.

Das Signal vK(t) - das Soll-Geschwindigkeit-Signal v*(t) mit dem darauf aufgeschalteten Kompensationssignal K1, K2, K1* oder K2* - kann auf ein von dem Lageregler LR erzeugtes Signal addiert und einem Drehzahlregler DZR zugeführt werden, der in der Servo-Achs-Antriebseinheit SAA enthalten ist.

Mit anderen Worten bilden das Kompensationssignal K(t), der Lagerelger-Ausgang und der Ausgang der Geschwindigkeitsvorsteuerung GV bzw. das Geschwindigkeits-Soll-Signal v*(t) zusammen den Drehzahlregler-Eingang.

Der Drehzahlregler DZR kann ein Signal erzeugen, welches nach einer Addition mit einem von der Drehmomentvorsteuerung DV erzeugten Signal als ein Soll-Motordrehmoment-Signal M*(t) einem Motor (Motor mit Last) MOT zugeführt werden kann. Der Motor mit Last MOT stellt das zu regelnde System - also eine Maschinen-Achse - dar und ist ein Beispiel des erfindungsgemäßen Regelziels. Der Motor kann in der Servo-Achs-Antriebseinheit SAA enthalten sein. Der Motor MOT kann auch als ein Teil der Werkzeugmaschine WZM ausgebildet sein, deren Achse von der Servoantrieb-Regeleinrichtung SRE (von der NC-Steuerung NCS und der Servo-Achs-Antriebseinheit SAA) geregelt werden kann und im Betrieb geregelt wird.

Beim Auftreten einer Störung in der Werkzeugmaschine WZM, die beispielsweise, wie bereits erwähnt, durch eine Reibung hervorgerufen werden kann (Reibeffekt), kann das Kompensationssignal K, K1, K2, K1* oder K2* beispielsweise basierend auf einem der vorgenannten Kompensationsparametersätze P, P1, P2, P1*, P2* generiert werden.

Die Reibeffekte, insbesondere Haftreibungseffekte können insbesondere an den Umkehrpunkten auftreten. Daher kann es zweckdienlich sein, wenn die Kompensation infolge eines bestimmten Ereignisses beispielsweise eines Nulldurchgangs des Geschwindigkeitsvorsteuersignals, was dem Passieren eines Umkehrpunktes entspricht, ausgelöst wird (z.B. bei t=0 in FIG 2).

Die Detektion eines Umkehrpunkts kann durch Detektion eines Nulldurchgangs eines Geschwindigkeitssignals erfolgen. Als Geschwindigkeitssignal kann z.B. das Geschwindigkeit-Ist-Signal v(t) oder der Ausgang des Positionsreglers LR oder der Ausgang der Geschwindigkeitsvorsteuerung v*(t) in FIG 1 verwendet werden.

Danach kann das Kompensationssignal K(t) für die Dauer Tt gleich null sein ($t0 \leq t < Tt$, $|K(t)|=0$).

Im Anschluss kann die Amplitude des Kompensationssignal vorzugsweise sprunghaft auf einen bestimmten Wert erhöht und auf diesem Niveau für eine bestimmte Zeit $Tt \leq t < Tt+Th$ gehalten werden ($|K(t)| = Amp$). Danach kann ein Exponentielles Abklingen mit $|K(t)| = Amp \cdot exp((Tt+Th-t)/Td)$ folgen.

Das Vorzeichen von K(t) kann sich nach der Art des Umkehrpunkts richten. Es kommen folgende Bezeichnungen für die Umkehrpunkte in Betracht:
Wechsel von einer positiven zu einer negativen Achs-Geschwindigkeit: Umkehrpunkt 1 bzw. UP1 oder oberer Umkehrpunkt; und Wechsel von einer negativen zu einer positiven Achs-Geschwindigkeit: Umkehrpunkt 2 bzw. *UP2* oder unterer Umkehrpunkt. Die den Umkehrpunkten nachfolgenden Zeitfenster mit der Dauer einer Periodenhälfte *STperi/2* des sinus-förmigen Sollverlaufs werden mit *T_UP1* und *T_UP2* bezeichnet. Es kann vorteilhaft sein, wenn das Vorzeichen von K(t) positiv ist, wenn die Geschwindigkeit ihr Vorzeichen von negativ nach positiv wechselt, und negativ, wenn die Geschwindigkeit ihr Vorzeichen von positiv nach negativ wechselt.

Um unterschiedlicher Beschleunigung an unterschiedlichen Umkehrpunkten Rechnung zu tragen, können die Parameter *Amp, Tt, Th, Td* für die beiden Umkehrpunkte getrennt vorgegeben werden.

Der in FIG 2 gezeigte Kompensationsverlauf beziehungsweise das gezeigte Kompensationssignal kann durch vier frei wählbare Parameter $P = \{Amp, Tt, Th, Td\}$ je Umkehrpunkt UP1, UP2 festgelegt werden.

Auch andere Formen der Kompensationssignale zur Kompensation, beispielsweise zur Reibkompensation bei einer Maschinenachse, beispielsweise bei einer Linearachse, insbesondere bei einer lagegeregelten Vorschub-Achse der Werkzeugmaschine WZM sind denkbar. Z.B. kann eine Impulsfunktion verwendet werden. Die Kompensation kann einen PT1- oder PT2-förmigen Anstieg des Kompensationssignals anstelle des oben gezeigten sprungförmigen Anstiegs aufweisen. Außerdem kann Kompensationsfunktion abschnittsweise aus Polynomen n-ten Grades definiert sein.

Darüber hinaus kann der Motor MOT Rückkopplungssignale für den Lageregler LR und den Drehzahlregler DZR erzeugen. Das Rückkopplungssignal für den Lageregler LR kann eine Ist-Motorposition x(t) (erstes Gebersystem) und eine Ist-Lastposition Lx(t) (zweites Gebersystem) umfassen. Das Rückkopplungssignal für den Drehzahlregler DZR kann eine Ist-Motordrehzahl n(t) und eine Ist-Lastdrehzahl Ln(t) umfassen.

FIG 3 zeigt eine Systemarchitektur mit einer der Servoantrieb-Regeleinrichtung SRE zugeordneten Recheneinrichtung RE zur Bestimmung der Kompensationsparameter.

Die Recheneinrichtung RE umfasst beispielsweise zumindest einen maschinenlesbaren, z.B. flüchtigen oder nicht-flüchtigen Speicher, auf welchem maschinenausführbare Komponenten gespeichert werden können, und zumindest einen mit dem maschinenlesbaren Speicher operativ gekoppelten Prozessor, der dazu konfiguriert ist, die maschinenausführbaren Komponenten auszuführen.

Zusammenfassend umfasst die Recheneinrichtung RE bzw. der Speicher der Recheneinrichtung RE eine Komponente CP mit Befehlen, die beim Ausführen der Komponente CP durch den Prozessor der Recheneinrichtung RE (oder durch einen anderen Prozessor), die Servoantrieb-Regeleinrichtung SRE veranlassen, einen Betriebsvorgang/ ein Betriebsszenario, bei dem die zu kompensierende Störung aufgrund von Reibeffekten auftritt, durchzuführen.

Die Recheneinrichtung RE kann, muss aber nicht, ein Teil der Servoantrieb-Regeleinrichtung SRE sein. Die Ressourcen, die zur Speicherung und Ausführung der Komponente CP notwendig sind, können durch die Servoantrieb-Regeleinrichtung SRE bereitgestellt werden. Sie können aber auch durch eine von der Servoantrieb-Regeleinrichtung SRE baulich getrennte Einheit, z.B. durch einen PC bereitgestellt werden.

FIG 3 verdeutlicht, dass die Recheneinrichtung RE als eine von der Servoantrieb-Regeleinrichtung SRE baulich getrennt ausgebildete Einheit ausgebildet sein kann, und illustriert Art und Weise, wie die Recheneinrichtung RE bzw. die maschinenausführbare Komponente CP, z.B. ein Softwaremodul, das auf dem maschinenlesbaren Speicher der Recheneinrichtung RE gespeichert ist, mit der Servoantrieb-Regeleinrichtung SRE interagiert, wenn sie (die Komponente CP) durch den Prozessor der Recheneinrichtung RE abgearbeitet wird.

Die Komponente CP kann beispielsweise als Teil (z.B. als Modul) einer Software, z.B. einer HMI-, einer Inbetriebnahme- oder Engineering-Software ausgebildet sein. Diese Software kann entweder auf einem (externen) PC, einem in die Anlage integrierten IPC oder unmittelbar auf der NCU der NC-Steuerung ausgeführt werden. Die Komponente CP kann ferner auf der NC-Steuerung NCS oder auf einer PLC-Steuerung ausgeführt und vorzugsweise gespeichert sein.

Die Komponente CP kann als eine Applikation eines industriellen Computers, z.B. eines Edge-Computers oder als eine Cloud-Applikation ausgebildet sein.

Die Komponente CP kann bspw. auf einer Programmierung in Matlab o.Ä. basieren, der durch einen entsprechenden Interpreter in die Sprache C++ umgesetzt werden kann (sog. Codegenerierung) .

Als Ausgabewerte der Komponente CP dienen ein Parametersatz P, P1, P2, P1* oder P2* aus den Kompensationsparametern und Steuerwerte SW für die Servoantrieb-Regeleinrichtung SRE.

Die Komponente CP stößt somit eine Durchführung eines Betriebs- beziehungsweise eines Messszenarios an, indem sie der Servoantrieb-Regeleinrichtung SRE einen Parametersatz P, P1, P2, P1* oder P2* und die Steuerwerte SW zuführt.

Die Steuerwerte SW können beispielsweise Sollwerte, z.B. Soll-Positionswerte für das Soll-Position-Signal x*(t) umfassen. Darüber hinaus kann die Komponente CP ein boolesches Signal zur Aktivierung und/oder Deaktivierung des Messszenarios auf der NC-Steuerung NCS übergeben.

Es versteht sich, dass die Servoantrieb-Regeleinrichtung SRE ein entsprechendes Teileprogramm abarbeitet, wenn sie den Betriebsvorgang / das Betriebs- / das Messszenario durchführt.

Darüber hinaus kann die Komponente CP Kenngrößen S, mit welchen bspw. ein Soll-Verlauf S*(t) z.B. für ein definiertes Zeitintervall $0 \leq t < Txsoll$ festgelegt werden kann, als Eingangswerte erhalten. Der Soll-Verlauf *S*(t)* kann als Referenzszenario für die Zeit der Bestimmung der Kompensationsparameter herangezogen werden und repräsentiert ein Szenario, für welches eine Kompensation von Störungen angestrebt wird.

Beispielsweise enthalten die Kenngrößen S bei dem vorgenannten sinus-förmigen Positions-Soll-Signal $x*(t) = Samp \cdot sin(2\pi t/STperi)$ die Amplitude *Samp* und die Periodendauer *STperi* der Sinus-Bewegung.

FIG 3 ist zu entnehmen, dass die Servoantrieb-Regeleinrichtung SRE die (gleichen) Kenngrößen ebenfalls erhält (z.B. per manuelle Angabe).

Der sinusförmige Sollverlauf $x*(t)$ führt zu einer Hin- und Her-Bewegung der Vorschub-Achse und enthält zwei Umkehrpunkte, wobei bei einem ersten Umkehrpunkt sowohl bezüglich der Ist- als auch bezüglich der Sollgrößen eine Umkehr von positiver zu negativer Geschwindigkeit stattfindet und bei einem zweiten Umkehrpunkt eine Umkehr von negativer zu positiver Geschwindigkeit stattfindet.

Darüber hinaus kann die Komponente CP Maschinendaten MD erhalten, die beispielsweise von einem Maschinennutzer vorgegeben werden. Die Maschinendaten können beispielsweise Information über den Achs-Typ (rotatorische oder translatorische Bewegung der Achse, etc.), Proportionalverstärkung Kv der Lageregelung LR, Nachstellzeit Tn des Integrationsglieds der Drehzahlregelung DZR, etc. umfassen.

Ferner können der Komponente CP Einstellparameter A, welche die Funktion des Algorithmus / der Komponente CP näher spezifizieren zugeführt werden. Beispielsweise kann die Komponente CP über einen Expertenmodus verfügen, wobei ein Einstellen der Parameter A nur in dem Expertenmodus möglich ist.

Bei dem Durchführen des Betriebsszenarios generiert die Servoantrieb-Regeleinrichtung SRE ein Kompensationssignal K, K1, K2, K1*, K2*. Als eine Rückmeldung von der Werkzeugmaschine WZM erhält die Servoantrieb-Regeleinrichtung SRE ein Ist-Signal beziehungsweise ein Messsignal MS1, MS2, MS3.

Diese Messsignale MS1, MS2, MS3 können die vorgenannten Rückkopplungssignale des Motors MOT für den Lageregler LR und den Drehzahlregler DZR sein - also Ist-Position x(t), eine Ist-Lastposition Lx(t), Ist-Drehzahl n(t) und eine Ist-Lastdrehzahl Ln(t).

Die Messsignale MS1, MS2, MS3 kann die Servoantrieb-Regeleinrichtung SRE der Recheneinrichtung RE, insbesondere der Komponente CP zuführen.

Außerdem kann die Komponente CP zusätzlich ein oder mehrere der folgenden Signale verwenden:

Positions-Soll-Verlauf $x*(t)$;
Kompensationssignal $K(t)$;
Geschwindigkeits-Soll-Verlauf $v*(t)$.

Dafür kann die Komponente CP die Signale $x*(t)$, $K(t)$, $v*(t)$ entweder jeweils selbst bilden oder von Servoantrieb-Regeleinrichtung SRE übertragen bekommen. Falls die Komponente CP die Signale selbst bildet, bildet sie das Signal $x*(t)$ vorzugsweise sinusförmig und überträgt dieses an Servoantrieb-Regeleinrichtung SRE.

Die in der Komponente verwendeten Signale können, beispielsweise über den erwähnten vorgegebenen Zeithorizont *Txsoll* aufgezeichnet werden.

Die Abtastzeit der Messung kann sich beispielsweise nach dem Takt der Lageregelung LR richten und z.B. 125ps, 250ps, 500ps, 1ms, 2ms, 4ms, 8ms betragen.

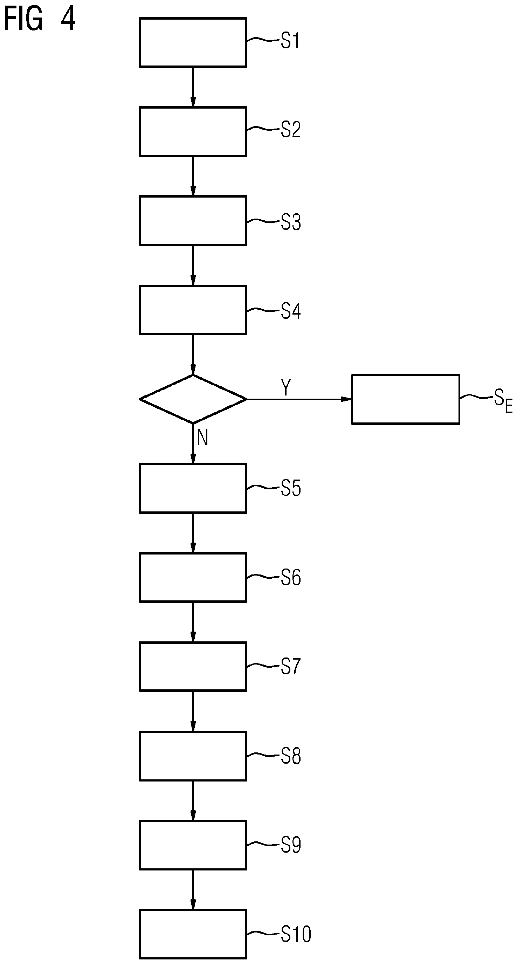

FIG 4 zeigt ein Flussdiagramm, das einen Ablauf eines beispielhaften Verfahrens zur Ermittlung der Kompensationsparameter veranschaulicht. Das Verfahren kann beispielsweise auf der Systemarchitektur der FIG 3 ablaufen.

Um die Kompensationsparameter P1* zu ermitteln, wird zunächst ein erster Testparametersatz P1 bereitgestellt - Schritt S1. Dieser kann beispielsweise per manuelle Eingabe über eine Benutzer-Schnittstelle der Komponente CP bereitgestellt werden. Die Komponente CP kann den ersten Testparametersatz P1 (nach bestimmten Vorgaben) auch automatisch generieren.

Der erste Testparametersatz P1 kann z.B. zeitlich konstante Kompensationsparameter umfassen, die beispielsweise alle gleich null sein können (erster Testlauf: ohne Kompensation).

In Schritt S2 führt die Komponente CP den ersten Testparametersatz P1 der Servoantrieb-Regeleinrichtung SRE zu und veranlasst diese, das beispielsweise durch die Kenngrößen S und die Steuerwerte SW vorgegebene Messszenario durchzuführen (erste Messung). Falls notwendig kann die Komponente CP der Servoantrieb-Regeleinrichtung SRE auch die Sollwerte SW zuführen oder das Durchführen des Messszenarios durch ein einfaches Signal an die Servoantrieb-Regeleinrichtung SRE, z.B. wie oben erwähnt, durch ein boolesches Signal anstoßen und/oder stoppen.

Die Servoantrieb-Regeleinrichtung SRE, vorzugsweise das Reibkompensationsmodul RKM der Servoantrieb-Regeleinrichtung SRE generiert aus dem ersten Testparametersatz P1 ein erstes Test-Kompensationssignal K1 und führt das zur Messung vorgesehene Betriebsszenario durch, bei dem der erste Testparametersatz P1 verwendet wird. Dabei erhält die Servoantrieb-Regeleinrichtung SRE ein erstes Messsignal MS1 als Rückmeldung.

Es ist denkbar, dass alle Parameter im Testparametersatz P1 gleich null sind, sodass das erste Test-Kompensationssignal K1 gleich null ist, d.h. das Betriebsszenario ohne Kompensation durchgeführt wird.

Anschließend kann die Servoantrieb-Regeleinrichtung SRE das erste Messsignal MS1 der Komponente CP der Recheneinrichtung RE zuführen.

Das erste Messsignal MS1 kann beispielsweise ein Positions-Ist-Verlauf x(t) sein, welches beispielsweise sich auf eine beliebige Messstelle an der Vorschubachse bezieht und durch einen rotatorischen oder translatorischen Geber ermittelt werden kann. Es ist möglich, dass der hierzu verwendete Geber nur für die Zeit der Parameter-Bestimmung zur Verfügung gestellt wird. Der Geber kann bspw. an der Vorschub-Achse montiert werden.

In Schritt S3 kann die Komponente CP aus dem ersten Messsignal ein erstes Fehlersignal (einen ersten Zeitverlauf des Folgefehlers) bestimmen. Hierzu kann die Komponente CP beispielsweise Sollwerte verwenden, welche Sollwerte durch das Messszenario festgelegt sind.

Beispielsweise kann die Komponente von dem zeitverschobenen Lage/Position-Sollwert $x^*(t\text{-}Te)$ den Lage/Position-Istwert $x(t)$ subtrahieren: $eX(t) = x^* (t\text{-}Te) -x (t)$.

Ein solches Fehlersignal, das als eine Differenz zwischen Ist-Position und zeitlich verschobener Soll-Position gebildet wird, ist bei der Bewertung des Reib-Fehlers ist besonders vorteilhaft. Durch die zeitliche Verschiebung der Soll-Position kann die auch ohne Reibung zu erwartende Verschiebung zwischen Soll- und Ist-Position berücksichtigt werden. Mit dieser Verschiebung ist wegen Verzögerungszeiten des Mikrocontrollers bei Ausführung des Regel- und Steuerungsalgorithmus zu rechnen.

Dabei kann die Variable *Te* beispielsweise so bestimmt werden, dass sich in einem Zeitintervall, in dem keine Achsumkehr auftritt, eine minimale Norm, z.B. 2-Norm für eX(t) ergibt. Dadurch kann erreicht werden, dass eX(t) nur die durch Störeffekte, insbesondere Störeffekte, z.B. Reibeffekte an den Umkehrpunkten, verursachte Abweichungen repräsentiert. Abweichungen durch Verzögerungen bzw. Totzeiten bei der Messung von x(t) und systematische Abweichungen, die bei Verfahren der Achse mit $x^*(t) \neq 0$ und einer nicht perfekt eingestellten Steuerungs- und Regelungsstruktur immer auftreten, werden auf diese Weise isoliert. Zur numerischen Bestimmung von Te kann bspw. ein lineares Least-Squares-Verfahren verwandt werden.

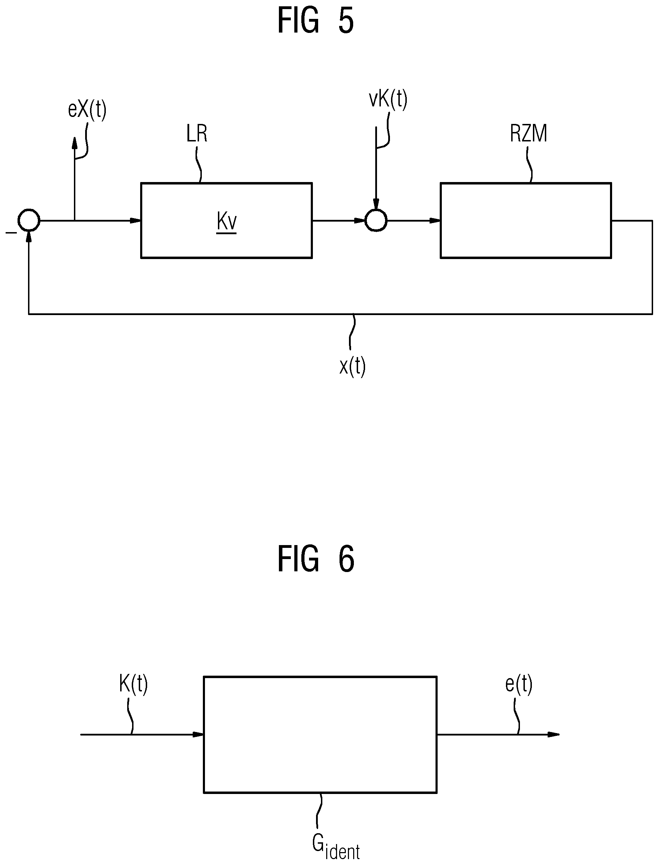

In Schritt S4 ermittelt die Komponente CP anhand des ersten Fehlersignals die Kompensationsparameter P1*. Dabei macht sich die Komponente ein vorzugsweise dynamisches Ersatzmodell EM (siehe FIG 5) zunutze, bei dem das Fehlersignal EM ein Ausgangssignal bildet. Als Eingangssignal für das Ersatzmodell EM wird ein Signal verwendet, welches im Zusammenhang mit dem Kompensationssignal K(t) steht. Das Ersatzmodell EM beschreibt also eine Beziehung zwischen dem Kompensations- und dem Fehlersignal.

Beim Ermitteln der Kompensationsparameter P1* führt die Komponente CP eine Optimierung anhand des Ersatzmodells EM durch.

Beispielsweise wird bei der Optimierung aus dem ersten Fehlersignal, beispielsweise dem eX(t), und dem Ersatzmodell EM ein dem Fehlersignal entsprechendes Ersatz-Kompensationssignal, z.B. *v_eX_equiv(t),* gebildet. Die Optimierung hat durch Anpassung der Kompensationsparameter das Ziel die Differenz zwischen dem Ersatz-Kompensationssignal und dem Kompensationssignal, wobei das Kompensationssignal bzw. der das Kompensationssignal definierende Parametersatz als Variable verwendet wird, zu minimieren.

Das Ersatzmodell EM kann beispielsweise auf der Recheneinrichtung RE oder auch auf einem von der Recheneinrichtung RE separaten (entfernten) Speicher, z.B. in einer Cloud gespeichert sein.

FIG 5 zeigt ein Ersatzmodell EM eines geschlossenen Lageregelkreises, welches als erfindungsgemäßes Ersatzmodell verwendet werden kann. Das Ersatzmodell der FIG 5 umfasst ein Modell einer lagegeregelten NC-Achse, welche ein als lineares dynamisches System, insbesondere als ein LTI System (lineares zeitinvariantes dynamisches System) betrachtet wird.

Als Eingang und Optimierungsvariable kann dabei beispielsweise das Kompensationssignal K(t) verwendet werden, wobei das erste Fehlersignal eX(t) als Ausgang gesehen wird.

Das Ersatzmodell EM der FIG 5 beschreibt also das dynamische Ein-/Ausgangs-Verhalten, z.B. zwischen K (t) und *eX(t).* Dabei kann es zweckdienlich sein, von einer idealen Geschwindigkeitsvorgabe und einem (reinen) Verstärkungsglied mit einem Proportionalfaktor *Kv* als Lageregler LR - also von einer idealen Geschwindigkeitsregelung - auszugehen. Das Signal K(t) mit dem Ausgang des Lagereglers LR bildet den Eingang für ein Modell RZM des Regelziels, hier - des Motors mit Last MOT bzw. der Werkzeugmaschinenachse.

Das Ersatzmodell EM ist vorzugsweise ein PT1-Glied. Dabei kann das Übertragungsverhalten zwischen Eingangs- und Ausgangssignal durch den folgenden mathematischen Operator $G(s)=\text{-}1/(Kv+s)$ beschrieben werden. Die Variable s bezeichnet den Laplace-Operator. G(s) wird als Übertragungsfunktion bezeichnet und beschreibt das Übertragungsverhalten der gesamten geregelten Achse also von dem oben beschriebenen Verhalten - K(t) als Eingang, eX(t) als Ausgang.

Beispielsweise kann basierend auf dem genannten Ein-/Ausgangsverhalten (auf dem Ersatzmodell EM) eine Umrechnung des in Schritt S3 bestimmten ersten Fehlersignals *eX(t)* in das entsprechende Ersatz-Kompensationssignal *v_eX_equiv(t)* erfolgen, welches als Eingangssignal verwendet wird. Mathematisch kann dies durch Inversion der zuvor beschriebenen Übertragungsfunktion erreicht werden.

Dies kann beispielsweise in folgenden Teilschritten erfolgen. Zunächst kann das erste Fehlersignal *eX(t)* tiefpassgefiltert werden. Anschließend kann eine zeitliche Ableitung des tiefpassgefilterten ersten Fehlersignals beispielsweise durch numerische Differentiation gebildet werden. Danach kann das erste Fehlersignal eX(t) mit dem Faktor der Proportionalverstärkung Kv multipliziert werden. Zuletzt werden die Ableitung des tiefpassgefilterten ersten Fehlersignals und das erste mit dem Faktor der Proportionalverstärkung Kv multiplizierte Fehlersignal zusammenaddiert.

Anhand des dem ersten Fehlersignal eX(t) entsprechenden Ersatz-Kompensationssignals *v_eX_equiv(t)* können die Parametersätze P1*_UP1, P1*_UP2 für den jeweiligen Umkehrpunkt wie folgt ermittelt werden. Die beiden Umkehrpunkte *UP1* und *UP2* können dabei in den Zeitintervallen *T_UP1* und *T_UP2* getrennt betrachtet werden. Als Amp kann das Betragsmaximum von dem invertierten ersten Fehlersignal, also von dem Ersatz-Kompensationssignal *v_eX_equiv(t)* dienen. Die Verzögerungszeit kann gleich null gesetzt werden *Tt = 0*. Die Haltezeit Th und die Abklingzeit *Td* können als *Th = k·Tsum, Td = (1-k) · Tsum* mit *0 < k < 1* festgelegt werden, wobei der Parameter k durch die Einstellparameter bzw. Algorithmus-Parameter A festgelegt/ eingestellt werden kann. Dabei kann der Parameter *Tsum* durch Bilden eines Flächenintegrals von dem Ersatz-Kompensationssignal *v_eX_equiv(t)* und Dividieren des Flächenintegrals durch Amp bestimmt werden. Anschließend können die Parameter (Amp, Tt, Td, Th) derart variiert werden, dass ein bestimmter Gütewert J minimiert wird. Beispielsweise kann eine 1-Norm des ersten Fehlersignals eX(t) minimiert werden. Die Parameter, bei welchen ein Minimum erreicht wird, können als Kompensationsparameter P1* verwendet werden.

Als Gütewert J kann beispielsweise ein auf den simulierten Folgefehler (auf das simulierte Folgefehlersignal) bezogener Normalwert verwendet werden. Beispielsweise kann eine Norm des Folgefehlersignals, beispielsweise eines Lage- und/oder Drehzahl- und/oder Geschwindigkeit-Folgefehlers in einem Intervall nach einem Umkehrpunkt verwendet werden.

Je nach Art der zur Verfügung stehenden Messsignale (Lage und/oder Drehzahl und/oder Geschwindigkeit) können entsprechende (erstes, zweites oder auch - siehe unten - drittes) Fehlersignale unter Verwendung von einschlägigen SollSignalen als Differenzen gebildet und berechnet werden.

Es versteht sich, dass das oben Gesagte für beide Umkehrpunkte UP_1 und UP_2 gilt. In anderen Worten können sich die Gütewerte J aus abschnittsweiser Betrachtung des Fehlersignals *eX(t)* ermitteln werden. Beispielsweise können zwei Gütewerte *J_UP1* und *J_UP2* bezogen auf die beiden Umkehrpunkte mit den Zeitintervallen *T_UP1* und *T_UP2* verwendet werden. Die Parameter *Amp_UP1, Tt_UP1, Th_UP1, Td_UP1* beziehungsweise *Amp_UP2, Tt_UP2, Th_UP2, Td_UP2* sollen dabei so bestimmt werden, dass *J_UP1* beziehungsweise *J_UP2*minimal wird.

Als Gütewert J kann z.B. eine Norm, insbesondere BetragsMaximum, euklidische Norm, 4-Norm usw. dienen.

Als Zeitfenster kann z.B. ein fester Wert oder z.B. die Zeitdauer zwischen zwei Umkehrpunkten oder ein Bruchteil dieser Zeitdauer verwendet werden.

Alternativ können die Kompensationsparameter P1* dadurch ermittelt werden, dass an dem jeweiligen Umkehrpunkt Amp als Betragsmaximum von *Kv·eX(t)* festgelegt wird; die Verzögerungszeit und die Haltezeit Th gleich null gesetzt werden *Tt = Th = 0*; und die Abklingzeit *Td* als die Zeitdauer zwischen Zeitpunkten *T_eX_max* und *T_eX_30,* wobei *T_eX_max* ein Zeitpunkt, an dem *Kv·eX(t) = Amp* ist, und *T_eX_30* ein Zeitpunkt, ab welchem *Kv·eX(t)* sich in einem Intervall 0,3 · *Amp* bewegt.

Führen bereits die Kompensationsparameter P1* zu sehr guten Kompensationsergebnissen, kann die Ermittlung beendet und die Kompensationsparameter P1* übernommen werden und beispielsweise in der Recheneinrichtung RE und/oder in der Servoantrieb-Regeleinrichtung SRE gespeichert werden - Schritt S_E.

Um Kompensationsparameter P2* zu ermitteln, die zu noch besseren Ergebnissen führen, kann in Schritt S5 ein zweiter Testparametersatz P2 bereitgestellt werden. Der zweite Testparametersatz P2 kann beispielsweise per manuelle Eingabe über eine Benutzer-Schnittstelle der Komponente CP bereitgestellt werden. Die Komponente CP kann den zweiten Testparametersatz P2 (nach bestimmten Vorgaben) auch automatisch generieren.

Der zweite Testparametersatz P2 unterscheidet sich von dem ersten Testparametersatz P1, sodass sich daraus generierte Test-Kompensationssignale unterscheiden. Vorzugsweise besteht der zweite Testparametersatz P2 aus den in Schritten S1 bis S4 ermittelten Kompensationsparametern P1*.

In Schritt S6 führt die Komponente CP den ersten Testparametersatz P1 der Servoantrieb-Regeleinrichtung SRE zu und veranlasst diese, dasselbe Messszenario aber anhand des zweiten Testparametersatzes P2 durchzuführen (zweite Messung). Der zweite Testparametersatz P2 kann beispielsweise aus den ermittelten Kompensationsparametern P1* bestehen.

Falls notwendig kann die Komponente CP der Servoantrieb-Regeleinrichtung SRE auch die Sollwerte SW zuführen oder das Durchführen des Messszenarios durch ein einfaches Signal an die Servoantrieb-Regeleinrichtung SRE, z.B. wie oben erwähnt, durch ein boolesches Signal anstoßen und/oder stoppen.

Die Servoantrieb-Regeleinrichtung SRE, vorzugsweise das Reibkompensationsmodul RKM der Servoantrieb-Regeleinrichtung SRE generiert aus dem zweiten Testparametersatz P2 ein zweites Test-Kompensationssignal K2. Anschließend führt die Servoantrieb-Regeleinrichtung SRE das Messszenario durch, bei dem der zweite Testparametersatz P2 verwendet wird. Dabei erhält die Servoantrieb-Regeleinrichtung SRE ein zweites Messsignal MS1 als Rückmeldung von der Werkzeugmaschine WZM.

Anschließend kann die Servoantrieb-Regeleinrichtung SRE das zweite Messsignal MS1 der Komponente CP der Recheneinrichtung RE zuführen.

In Schritt S7 kann die Recheneinrichtung RE aus dem zweiten Messsignal MS2 ein zweites Folgefehlersignal berechnen.

Basierend auf den beiden Test-Kompensationssignalen K1, K2 und den beiden Fehlersignalen ermittelt die Komponente CP ein Übertragungsverhaltensmodell G_ident, wobei das Übertragungsverhaltensmodell G_ident ein Übertragungsverhalten beziehungsweise eine Beziehung zwischen einem Kompensationssignal K(t) (als Eingangssignal) und einem Fehlersignal e(t) (als Ausgangssignal) beschreibt (siehe FIG 6).

Das Übertragungsverhaltensmodell $G_{ident}$ kann beispielsweise durch ein geeignetes Identifikationsverfahren für dynamische Systeme bestimmt werden.

In einer Ausführungsform kann ein multiplikativer Zusammenhang zwischen dem Übertragungsverhaltensmodell und der oben betrachteten Übertragungsfunktion des geschlossenen Lageregelkreises bestehen.

Beispielsweise kann die Berechnung/Bestimmung des Übertragungsverhaltensmodells $G_{ident}$ wie folgt erfolgen. Zunächst wird ein Differenzsignal *vKomp-Diff(t)* zwischen dem ersten Kompensationssignal K1 und dem zweiten Kompensationssignal K2 berechnet. Danach erfolgt eine Berechnung des Differenzsignals *eXDiff(t)* zwischen dem ersten Messsignal MS1 und dem zweiten Messsignal MS2, die beispielsweise als Ist-Positionssignale ausgebildet sind, oder eine Berechnung einer Differenz zwischen dem ersten und dem zweiten Fehlersignal. Anschließend kann das Übertragungsverhaltensmodell $G_{ident}$ beispielsweise mittels eines linearen Least-Sqaures-Verfahrens für ARX-Modell (Autogressive Model with exogenous input) ermittelt werden, wobei die Kompensationssignalendifferenz *vKompDiff(t)* als Eingangs-Signal und die Mess- oder die Fehlersignalendifferenz *eXDiff(t)* als Ausgangs-Signal verwendet wird. Die für das ARX-Modell vorzugebenden Zähler- und Nenner-Ordnung kann durch die Einstell- beziehungsweise Algorithmus-Parameter A festgelegt werden.

Auch andere Verfahren zur Bestimmung des Übertragungsverhaltensmodells $G_{ident}$ sind denkbar, die basierend auf zusammengehörigen Datensätzen oder Messungen des zeitlichen Verlaufs der Eingangs- und Ausgangssignale eines dynamischen Systems Struktur und Parameter eines geeigneten mathematischen Modells, welches das statische und/oder dynamische Verhalten des untersuchten Systems hinreichend genau beschreibt.

Das Übertragungsverhaltensmodell $G_{ident}$ kann beispielsweise als eine zeitdiskrete Übertragungsfunktion ausgebildet sein.

In Schritt S8 werden die Kompensationsparameter P2* anhand des Übertragungsverhaltensmodells $G_{ident}$ ermittelt.

Dabei kann eine Minimierung eines Gütewerts erfolgen, welcher sich sowohl auf das erste Fehlersignal, z.B. eX(t), als auch auf ein simuliertes Fehlersignal bezieht, wobei das simulierte Fehlersignal durch Anwenden des Übertragungsverhaltensmodells $G_{ident}$ auf einen (variierbaren) Kompensationsverlauf erhalten wird. Durch Variieren der den Kompensationsverlauf definierenden Parameter wird angestrebt, das simulierte Fehlersignal mit dem ersten Fehlersignal in Deckung zu bringen.

Wie bereits erwähnt, ist die Optimierung nicht auf das erste Fehlersignal als Ziel beschränkt. Im Allgemeinen kann ein Gütewert, der sich auf ein vorgegebenes Fehlersignal und auf ein simuliertes (Fehler-)Signal bezieht, optimiert werden. Dabei wird, um das simulierte (Fehler-)Signal zu erhalten, das Übertragungsverhaltensmodell $G_{ident}$ auf einen (beliebigen) Kompensationsverlauf angewandt. Das simulierte (Fehler-)Signal bildet somit den Anfangspunkt für die Optimierung. Als vorgegebenes Fehlersignal kann das erste oder auch das zweite Fehlersignal verwendet werden. Die Verwendung des ersten Fehlersignals kann allerdings zu besseren Ergebnissen führen.

Mit anderen Worten können die Kompensationsparameter P2* anhand des Übertragungsverhaltensmodells $G_{ident}$ wie folgt ermittelt werden (z.B. die Komponente CP kann dies durchführen). Zunächst wird aus beliebigen Kompensationsparametern (Anfangswerte für die Optimierung) ein Kompensationsverlauf erzeugt. Anschließend wird dieser Kompensationsverlauf als Eingang des Übertragungsverhaltensmodells $G_{ident}$ verwendet, um das simulierte Fehlersignal zu erzeugen. In einem weiteren Schritt wird ein Gütewert, der sich auf eine Differenz zwischen dem simulierten und dem ersten Fehlersignal bezieht, durch Variieren der Kompensationsparameter minimiert. Zur Bestimmung des Gütewerts aus dem simulierten und dem ersten Fehlersignal kann z.B. eine p-Norm bezogen auf ein vorgegebenes Zeitfenster nach Auftreten des Umkehrpunkts verwendet werden. Beispielsweise kann eine 4-Norm der Differenz zwischen $G_{ident}$ (vK (t)) und eX(t) innerhalb eines Zeitraums von 400 ms nach Auftreten eines Umkehrpunkts minimiert werden.

An dieser Stelle sei angemerkt, dass die Simulation *Gident{vK (t)}*, die die reale Messung, welche mindestens die Dauer zwischen zwei Umkehrpunkten (im Sekundenbereich, z.B. ca. 30 Sekunden) umfasst, ersetzt, in wenigen Milli-Sekunden abgeschlossen ist.

Es ist auch denkbar, eine andere p-Norm mit $p \in \mathbb{R}$, $p \geq 1$ zu verwenden.

Eine getrennte Betrachtung (die Ermittlung des Übertragungsverhaltensmodells $G_{ident}$ und die nachfolgende Optimierung) der beiden Umkehrpunkte in den Zeitintervallen *T_UP1* und *T_UP2* ist vorteilhaft.

Die Operation $G_{ident}(vK(t))$ beschreibt z.B. die aus dem Kompensationssignal *vK (t)* und dem identifizierten Übertragungsverhalten $G_{ident}$ berechnete Ausgangsgröße. $G_{ident}(vK (t))$ lässt sich beispielsweise durch ein numerisches Simulationsverfahren bestimmen. Für die Übertragungsfunktion $G_{ident}$ lässt sich beispielsweise eine lineare Differenzengleichung angeben, aus welcher sich *Gident(vK(t))* unmittelbar bestimmen lässt. Startzustände bzw. unbekannte Vergangenheitswerte der Folge *vK(t)* können gleich null gesetzt werden.

Als Optimierungsverfahren zur Ermittlung der Kompensationsparameter P2* kann beispielsweise ein iteratives nichtlineares gradientenbasiertes Verfahren verwendet werden.

Als Startwerte der Optimierung können dabei die vorgenannten anhand nur einer Messung ermittelten Parameterwerte P1* verwendet werden.

Die Suchrichtung kann nach einem Quasi-Netwon-Verfahren bestimmt werden.

Der für das Quasi-Newton-Verfahren notwendige Gradient des Gütewerts bezüglich der Optimierungsvariablen (der Kompensationsparameter) kann an jedem Iterationspunkt auf Basis einer analytischen Berechnungsvorschrift ermittelt werden.

Die Schrittweite des Iterationsschritts kann mit einem iterativen eindimensionalen Suchverfahren auf Basis des goldenen Schnitts bestimmt werden.

Das Optimierungsverfahren kann Ungleichungsbeschränkungen bezüglich der Optimierungsvariablen berücksichtigen.

Als Abbruchbedingung für die Optimierung können verschiedene Kriterien, u.a. ein Grenzwert für die maximale Anzahl an Iterationen und ein Toleranzkriterium für die Gütewert-Verbesserung, verwendet werden.

In Schritt S9 kann die Komponente CP die Servoantrieb-Regeleinrichtung SRE dazu veranlassen, den Betriebsvorgang ein weiteres Mal durchzuführen und dabei die anhand des Übertragungsverhaltensmodells $G_{ident}$ ermittelten Kompensationsparameter P2* zu verwenden. Dabei generiert die Servoantrieb-Regeleinrichtung SRE das entsprechende Kompensationssignal und erhält als Rückmeldung ein drittes Messsignal MS3.

In Schritt S10 kann die Komponente CP basierend auf dem dritten Messsignal MS3 ein drittes Fehlersignal ermitteln, und das erste, das zweite und das dritte Fehlersignale vergleichen, um jene Kompensationsparameter zu wählen, welche zu dem geringsten Fehlersignal führen.

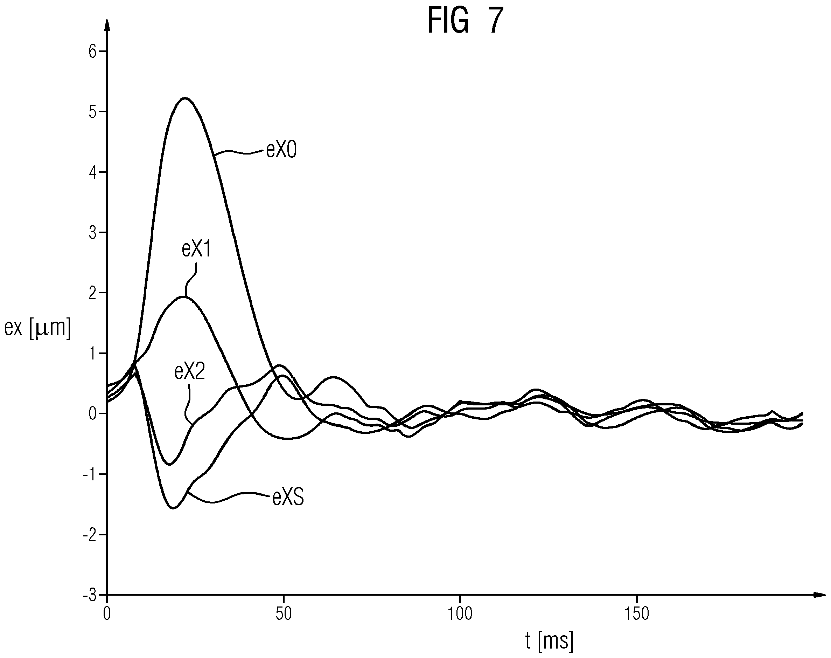

Ein Beispiel eines Ergebnisses nach Schritt S10 ist in FIG 7 veranschaulicht. In FIG 7 sind beispielhaft unterschiedliche Fehlersignale eX0, eXS, eX1, eX2 für eine translatorische Vorschubachse gezeigt, wobei eX0 das erste Fehlersignal ist, welches beispielsweise aus einer nicht vorhandenen Kompensation resultiert (Kompensationssignal = 0), eXS ein Fehlersignal mit einer Kompensation nach dem Stand der Technik, eX1 das zweite Fehlersignal und eX2 das dritte Fehlersignal, das, wie in Schritt S10 beschrieben, hinsichtlich des zweiten und des ersten Fehlersignals korrigiert wurde.

Der Verlauf der Kompensation kann ferner von der Achsstellung der Maschine abhängen. Deshalb kann es zweckmäßig sein, wenn die Parameter P, die Testparameter P1, P2 und die Kompensationsparameter P1*, P2* abhängig von der Achsstellung der Maschine ermittelt werden, wobei der Vektor X die Position der Maschinenachsen kennzeichnet. Z.B. können die Parameter Amp, *Tt, Th, Td* der entsprechenden Parametersätze von *X* abhängen. Insbesondere bei Abhängigkeiten von der Achsstellung *X* ist eine schnelle automatisierte Ermittlung der achsstellungsabhängigen Parameter von hoher Bedeutung.

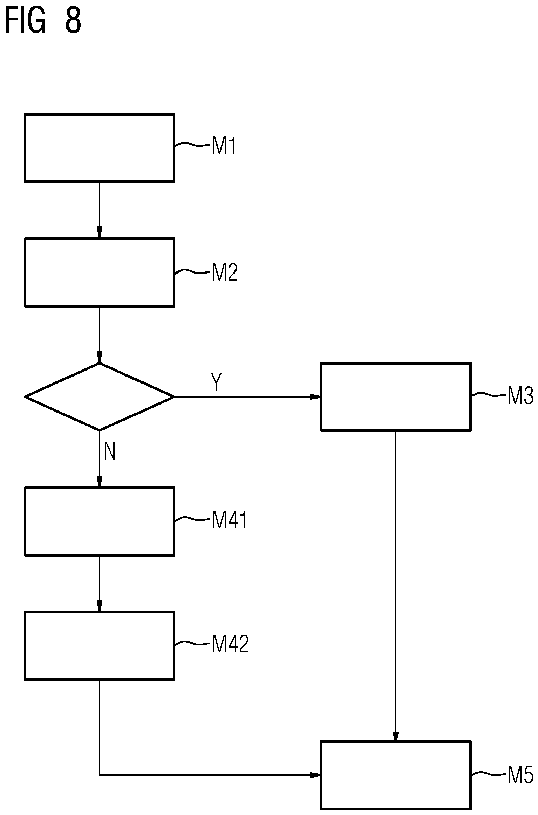

FIG 8 zeigt ein Flussdiagram, welches ein Verfahren für zustandsabhängige Wartung und/oder für Adaption an geändertes Systemverhalten veranschaulicht. Dabei wird ein Regelziel, beispielsweise die Werkzeugmaschine WZM überwacht. Das Regelziel wird im Betrieb von einer Servoantrieb-Regeleinrichtung, beispielsweise von der oben beschriebenen Servoantrieb-Regeleinrichtung SRE geregelt. Die Servoantrieb-Regeleinrichtung kann beispielsweise eine lagegeregelte Vorschubachse der Werkzeugmaschine regeln (s.o.). Die Servoantrieb-Regeleinrichtung ist dazu eingerichtet, beim Auftreten einer Störung in dem Regelziel anhand von (vorangestellten) Kompensationsparametern ein Kompensationssignal zu generieren, um die Störung zu kompensieren.

Während der Überwachung des Regelziels, beispielsweise der Maschinenachse, wird das oben beschriebene Verfahren zur Ermittlung von den (optimierten) Kompensationsparametern P1*, P2* ereignisgetriggert bzw. eventgesteuert und/oder in periodischen Zeitabständen ausgeführt - Schritt M1.

Anschließend - in Schritt M2 - werden die optimierten Kompensationsparameter P1* oder P2* mit den (vorangestellten) Kompensationsparametern verglichen.

Beim Vorliegen einer einen vordefinierten Wert (z.B. eine 10% Über- oder Unterschreitung bei Amp, Th, Tt, Td oder eines Gütewerts J) übersteigenden Abweichung der Kompensationsparameter von den optimierten Kompensationsparametern P1* oder P2* wird eine entsprechende Warnung ausgegeben - Schritt M41.

Diese Warnung kann anschließend von dem Bedienpersonal überprüft werden. Die Warnung kann auch eine Option zur Übernahme enthalten. Mit oder ohne diese Option können die optimierten Kompensationsparameter P1* oder P2* übernommen werden und die alten Parameter ersetzen - Schritt M42.

Die optimierten Kompensationsparameter P1* oder P2* können z.B. durch die Komponente CP auf der Recheneinrichtung RE oder auf der Servoantrieb-Regeleinrichtung SRE oder auch irgendwo sonst, z.B. in einer Cloud gespeichert werden.

Nach einer Übernahme der optimierten Kompensationsparameter P1* oder P2* kann die Servoantrieb-Regeleinrichtung SRE die Kompensation aufgrund dieser Parameter ausführen.

Dadurch kann eine Adaption an geändertes Systemerhalten und/oder Reibverhältnisse erfolgen.

Der Vergleich der Kompensationsparameter kann beispielsweise basierend auf entsprechenden Normgrößen, z.B. auf der vorgenannten p-Norm, und Toleranzwerten erfolgen.

Das Auslösen des Verfahrens zur Ermittlung von den optimierten Kompensationsparametern P1*, P2* kann beispielsweise nach definiertem Qualitätskriterium bei Referenzfahrt (z.B. Kreisformtest) oder bei regulärem Maschinen-Betrieb und Teilebearbeitung erfolgen (eventgetriggerte Auslösung). Ein solches Kriterium kann beispielsweise eine erhöhte Soll-Ist-Wert-Abweichung an den Achs-Umkehrpunkten. Es ist auch denkbar, dass das Verfahren in bestimmten Zeitintervallen, z.B. wöchentlich durchgeführt wird.

Das Verfahren zur Ermittlung von den optimierten Kompensationsparametern P1*, P2* kann ebenfalls bei Verschleißanalyse-Verfahren, anderen Wartungsverfahren, Condition-Monitoring-Verfahren benutzt werden.

Ist die ursprünglich eingestellte Kompensation immer noch gültig, d.h. die Unterschiede zwischen den (voreingestellten) Kompensationsparametern und den optimierten Kompensationsparametern sind (gemäß definierten Normgrößen, z.B. p-Norm, und Toleranzwerten) geringfügig, kann das System unverändert bleiben und die Kompensationsparameter P1*, P2* werden nicht übernommen - Schritt M3.

In Schritt M5 kann eine Speicherung von Zwischenwerten, Kompensationswerten, Gütemaßen beispielsweise zur Trenderkennung und zur weiteren Analyse erfolgen.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Insbesondere können die im Zusammenhang mit dem Verfahren beschriebenen Merkmale auch bei dem gezeigten System von Einrichtungen und Vorrichtungen zum Einsatz kommen bzw. diese vervollständigen und vice versa.

Zusammenfassend wird in dieser Offenbarung ein Verfahren vorgestellt, das im Rahmen eines Inbetriebnahme-Programms (PC- oder HMI-basiert) eine schnelle und im Sinn der Positioniergüte gute Wahl der Kompensationsparameter der oben beschriebenen Kompensation, insbesondere Reibkompensation erlaubt.

**Patentansprüche**

1. Verfahren zum Ermitteln von Kompensationsparametern (P1*), wobei die Kompensationsparameter (P1*) ein Kompensationssignal (K1*) festlegen, wobei das Kompensationssignal (K1*) dazu vorgesehen ist, zumindest eine Störung zu kompensieren, wobei die zumindest eine Störung im Betrieb eines Regelziels (MOT, WZM) aufgrund eines Reibeffekts auftritt, wobei das Regelziel (MOT, WZM) im Betrieb von einer Servoantrieb-Regeleinrichtung (SRE) geregelt wird, wobei der Reibeffekt im Betrieb an zumindest einem Umkehrpunkt einer servogetriebenen Achse des Regelziels (MOT, WZM) auftritt, wobei die Servoantrieb-Regeleinrichtung (SRE) dazu eingerichtet ist, beim Auftreten der zumindest einen Störung anhand der Kompensationsparameter (P1*) das Kompensationssignal (K1*) zu generieren, um einen auf die Störung zurückzuführenden Folgefehler zu reduzieren,
**dadurch gekennzeichnet, dass**

- ein erster Testparametersatz (P1) bereitgestellt wird,
- die Servoantrieb-Regeleinrichtung (SRE) veranlasst wird, einen Betriebsvorgang, bei dem die zumindest eine Störung auftritt, durchzuführen, wobei die Servoantrieb-Regeleinrichtung (SRE) bei dem Durchführen des Betriebsvorgangs basierend auf dem ersten Testparametersatz (P1) ein erstes Test-Kompensationssignal (K1) generiert und als Rückmeldung ein erstes Messsignal (MS1) erhält,
- aus dem ersten Messsignal (MS1) ein erstes Fehlersignal (eX(t)) ermittelt wird,
- die Kompensationsparameter (P1*) mittels eines Ersatzmodells (EM), wobei das Ersatzmodell (EM) Fehlersignale auf Kompensationssignale abbildet, und unter Verwendung des ersten Fehlersignals (eX(t)) ermittelt werden.

2. Verfahren nach Anspruch 1, wobei beim Ermitteln des ersten Fehlersignals (eX(t)) Sollwerte (v*(t)) verwendet werden, wobei die Sollwerte durch den Betriebsvorgang festgelegt sind.

3. Verfahren nach Anspruch 1 oder 2, wobei zum Bestimmen der Kompensationsparameter (P1*) eine Differenz zwischen einem Kompensationsverlauf und dem durch das Ersatzmodell (EM) auf ein Kompensationssignal abgebildeten ersten Fehlersignals (eX(t)) minimiert wird, wobei der Kompensationsverlauf als Minimierungsvariable verwendet wird.

4. Verfahren nach einem der Ansprüche 1 bis 3, wobei das Ersatzmodell (EM) das Verhalten der Servoantrieb-Regeleinrichtung (SRE) und des Regelziels (MOT) modelliert.

5. Verfahren nach Anspruch 4, wobei das Ersatzmodell als Modell eines geschlossenen Regelkreises, beispielsweise eines Lageregelkreises ausgebildet ist.

6. Verfahren nach einem der Ansprüche 1 bis 5, wobei der erste Testparametersatz (P1) aus Kompensationsparametern besteht, die alle gleich null sind und der Betriebsvorgang ohne Kompensation stattfindet.

7. Verfahren nach einem der Ansprüche 1 bis 6, wobei ferner

- ein zweiter Testparametersatz (P2) bereitgestellt wird,
- die Servoantrieb-Regeleinrichtung (SRE) veranlasst wird, den Betriebsvorgang zu wiederholen, wobei die Servoantrieb-Regeleinrichtung (SRE) bei dem Wiederholen des Betriebsvorgangs basierend auf dem zweiten Testparametersatz (P2) ein zweites Test-Kompensationssignal (K2) generiert und als Rückmeldung ein zweites Messsignal (MS2) erhält, wobei sich das zweite Test-Kompensationssignal (K2) von dem Test-Kompensationssignal (K1) unterscheidet,

- aus dem zweiten Messsignal (MS2) ein zweites Fehlersignal ermittelt wird,
- auf Basis von den Test-Kompensationssignalen (K1, K2) - als Test-Input - und den Fehlersignalen - als Test-Output

     - ein Übertragungsverhaltensmodell $(G_{ident})$ ermittelt wird, wobei das Übertragungsverhaltensmodell $(G_{ident})$ Kompensationssignale auf Fehlersignale abbildet,

     - die Kompensationsparameter (P2*) anhand des Übertragungsverhaltensmodells $(G_{ident})$ ermittelt werden.

8. Verfahren nach Anspruch 7, wobei beim Ermitteln der Kompensationsparameter (P2*) anhand des Übertragungsverhaltensmodells $(G_{ident})$ eine Optimierung eines auf ein vorgegebenes Fehlersignal und auf ein mittels des Übertragungsverhaltensmodells $(G_{ident})$ simuliertes Fehlersignal bezogenen Gütewerts (J) erfolgt.

9. Verfahren nach Anspruch 8, wobei die Optimierung vorzugsweise die Minimierung durch Variieren von Parametern erfolgt, welche Parameter ein Kompensationssignal festlegen, welches Kompensationssignal als Eingang für das Übertragungsverhaltensmodell $(G_{ident})$ verwendet wird, um ein simuliertes Fehlersignal zu generieren.

10. Verfahren nach Anspruch 9, wobei bei der Optimierung das simulierte Fehlersignal mit dem vorgegebenen Fehlersignal in Deckung gebracht wird.

11. Verfahren nach einem der Ansprüche 8 bis 10, wobei das vorgegebene Fehlersignal das erste Fehlersignal ist.

12. Verfahren nach einem der Ansprüche 8 bis 10, wobei das vorgegebene Fehlersignal das zweite Fehlersignal ist.

13. Verfahren nach einem der Ansprüche 8 bis 12, wobei eine p-Norm mit $p \in \mathbb{R}$, $p \geq 1$ als Gütewert (J) verwendet wird.

14. Verfahren nach einem der Ansprüche 7 bis 13, wobei der zweite Testparametersatz (P2) die anhand des Ersatzmodells (EM) bestimmten Kompensationsparameter (P1*) umfasst, vorzugsweise aus den anhand des Ersatzmodells (EM) bestimmten Kompensationsparametern (P1*) besteht.

15. Verfahren nach einem der Ansprüche 7 bis 14, wobei die Servoantrieb-Regeleinrichtung (SRE) veranlasst wird, den Betriebsvorgang ein weiteres Mal durchzuführen, wobei die Servoantrieb-Regeleinrichtung (SRE) ein Kompensationssignal (K2*) basierend auf den anhand des Übertragungsverhaltensmodells ermittelten Kompensationsparametern (P2*) generiert und als Rückmeldung ein drittes Messsignal (MS3) erhält, wobei basierend auf dem dritten Messsignal (MS3) ein drittes Fehlersignal ermittelt wird, wobei das erste, das zweite und das dritte Fehlersignale verglichen werden, um jene Kompensationsparameter zu wählen, welche zu dem geringsten Fehlersignal führen.

16. Verfahren nach einem der Ansprüche 1 bis 15, wobei die Kompensationsparameter abhängig von der Achsstellung des Regelziels ermittelt werden.

17. Verfahren nach einem der Ansprüche 1 bis 16, wobei die Achse eine Vorschub- oder Rotationsachse ist.

18. Verfahren nach einem der Ansprüche 1 bis 17, wobei der zumindest eine Umkehrpunkt ein Positions-Umkehrpunkt ist.

19. Verfahren, bei welchem

     - ein Regelziel (MOT) überwacht wird, wobei das Regelziel (MOT) im Betrieb von einer Servoantrieb-Regeleinrichtung (SRE) geregelt wird, wobei die Servoantrieb-Regeleinrichtung (SRE) dazu eingerichtet ist, beim Auftreten einer Störung in dem Regelziel (MOT) anhand von Kompensationsparametern (P) ein Kompensationssignal (K) zu generieren, um die Störung zu kompensieren, wobei die Störung aufgrund eines Reibeffekts auftritt und der Reibeffekt im Betrieb an zumindest einem Umkehrpunkt einer servogetriebenen Achse des Regelziels (MOT, WZM) auftritt, wobei
     - während der Überwachung ein Verfahren nach einem der Ansprüche 1 bis 18 ereignisgetriggert und/oder in periodischen Zeitabständen ausgeführt wird, um optimierte Kompensationsparameter (P1*, P2*) zu ermitteln,
     - die optimierten Kompensationsparameter (P1*, P2*) mit den Kompensationsparametern (P) verglichen werden,
     - beim Vorliegen einer einen vordefinierten Wert übersteigenden Abweichung der Kompensationsparameter von den optimierten Kompensationsparametern (P1*, P2*) eine Warnung ausgegeben wird.

20. Verfahren nach Anspruch 19, wobei das Verfahren ein Verschleißanalyse-Verfahren, eine Wartung oder Condition-Monitoring-Verfahren ist.

21. Verfahren nach Anspruch 19 oder 20, wobei beim Vorliegen einer einen vordefinierten Wert übersteigenden Abweichung der Kompensationsparameter von den optimierten Kompensationsparametern (P1*, P2*) die optimierten Kompensationsparameter (P1*, P2*) übernommen werden.

22. System umfassend eine Servoantrieb-Regeleinrichtung (SRE), ein Regelziel (MOT, WZM) und eine Recheneinrichtung (RE), wobei das Regelziel (MOT, WZM) im Betrieb von der Servoantrieb-Regeleinrichtung (SRE) geregelt wird, wobei im Betrieb des Regelziels (MOT, WZM) zumindest eine Störung aufgrund eines Reibeffekts auftritt, wobei der Reibeffekt im Betrieb an zumindest einem Umkehrpunkt einer servogetriebenen Achse des Regelziels (MOT, WZM) auftritt, wobei die Servoantrieb-Regeleinrichtung (SRE) dazu eingerichtet ist, beim Auftreten der zumindest einen Störung ein Kompensationssignal zu generieren, um die zumindest eine Störung zu kompensieren, wobei das Kompensationssignal durch Kompensationsparameter definiert ist, wobei die Recheneinrichtung (RE) dazu konfiguriert ist, um ein Verfahren nach einem der Ansprüche 1 bis 18 oder ein Verfahren nach einem der Ansprüche 19 bis 21 auszuführen.

23. System nach Anspruch 22, wobei die Servoantrieb-Regeleinrichtung (SRE) die Recheneinrichtung (RE) umfasst.

24. Computerprogramm, umfassend Befehle, die bewirken, dass ein System nach Anspruch 22 oder 23 ein Verfahren nach einem der Ansprüche 1 bis 18 oder ein Verfahren nach einem der Ansprüche 19 bis 21 ausführt.

25. Computerlesbares Medium, auf dem das Computerprogramm (CP) nach Anspruch 24 gespeichert ist.

**Claims**

1. Method for determining compensation parameters (P1*), wherein the compensation parameters (P1*) define a compensation signal (K1*), wherein the compensation signal (K1*) is provided to compensate for at least one disturbance, wherein the at least one disturbance occurs during operation of a control target (MOT, WZM) because of a friction effect, wherein the control target (MOT, WZM) is controlled during operation by a servo drive control device (SRE), wherein the friction effect occurs during operation at at least one reversal point of a servo-driven shaft of the control target (MOT, WZM), wherein the servo drive control device (SRE) is designed, on occurrence of the at least one disturbance, to generate the compensation signal (K1*) on the basis of the compensation parameters (P1*), in order to reduce a subsequent error that can be attributed to the disturbance,

**characterised in that**

- a first test parameter set (P1) is provided,
- the servo drive control device (SRE) is caused to perform an operating process, in which the at least one disturbance occurs, wherein the servo drive control device (SRE) generates a first test compensation signal (K1) during the performance of the operating process based on the first test parameter set (P1) and receives a first measurement signal (MS1) as feedback,
- a first error signal (eX(t)) is determined from the first measurement signal (MS1),
- the compensation parameters (P1*) are determined by means of a substitution model (EM), wherein the substitution model (EM) maps error signals to compensation signals, and using the first error signal (eX(t)).

2. Method according to claim 1, wherein setpoint values (v*(t)) are used during the determination of the first error signal (eX(t)), wherein the setpoint values are defined by the operating process.

3. Method according to claim 1 or 2, wherein to determine the compensation parameters (P1*) a difference between a compensation curve and the first error signal (eX(t)) mapped by the substitution model (EM) to a compensation signal is minimised, wherein the compensation curve is used as a minimisation variable.

4. Method according to one of claims 1 to 3, wherein the substitution model (EM) models the behaviour of the servo drive control device (SRE) and of the control target (MOT).

5. Method according to claim 4, wherein the substitution model is designed as a model of a self-contained control loop, for example of a position control loop.

6. Method according to one of claims 1 to 5, wherein the first test parameter set (P1) consists of compensation parameters which are all equal to zero and the operating process takes place without compensation.

7. Method according to one of claims 1 to 6, wherein further

- a second test parameter set (P2) is provided,
- the servo drive control device (SRE) is caused to repeat the operating process, wherein the servo drive control device (SRE) generates a second test compensation signal (K2) during the repetition of the operating process based on the second test parameter set (P2) and receives a second measurement signal (MS2) as feedback, wherein the second test compensation signal (K2) differs from the test compensation signal (K1),
- a second error signal is determined from the second measurement signal (MS2),
- on the basis of the test compensation signals (K1, K2) - as test input - and the error signals - as test output - a transmission behaviour model ($G_{ident}$) is determined, wherein the transmission behaviour model ($G_{ident}$) maps compensation signals to error signals,
- the compensation parameters (P2*) are determined on the basis of the transmission behaviour model ($G_{ident}$) .

8. Method according to claim 7, wherein an optimisation of a quality value (J) relating to a specified error signal and to an error signal simulated by means of the transmission behaviour model ($G_{ident}$) takes place during the determination of the compensation parameters (P2*) on the basis of the transmission behaviour model ($G_{ident}$) .

9. Method according to claim 8, wherein the optimisation, preferably the minimisation, takes place by varying parameters, said parameters defining a compensation signal, said compensation signal being used as input for the transmission behaviour model ($G_{ident}$), in order to generate a simulated error signal.

10. Method according to claim 9, wherein during the optimisation, the simulated error signal is made to coincide with the specified error signal.

11. Method according to one of claims 8 to 10, wherein the specified error signal is the first error signal.

12. Method according to one of claims 8 to 10, wherein the specified error signal is the second error signal.

13. Method according to one of claims 8 to 12, wherein a p-norm where $p \in \mathbb{R}$, $p \geq 1$ is used as a quality value (J).

14. Method according to one of claims 7 to 13, wherein the second test parameter set (P2) comprises the compensation parameters (P1*) ascertained on the basis of the substitution model (EM), and preferably consists of the compensation parameters (P1*) ascertained on the basis of the substitution model (EM).

15. Method according to one of claims 7 to 14, wherein the servo drive control device (SRE) is caused to perform the operating process a further time, wherein the servo drive control device (SRE) generates a compensation signal (K2*) based on the compensation parameters (P2*) determined on the basis of the transmission behaviour model and receives a third measurement signal (MS3) as feedback, wherein a third error signal is determined based on the third measurement signal (MS3), wherein the first, the second and the third error signals are compared in order to select those compensation parameters which result in the most minor error signal.

16. Method according to one of claims 1 to 15, wherein the compensation parameters are determined as a function of the shaft position of the control target.

17. Method according to one of claims 1 to 16, wherein the shaft is a feed shaft or rotational shaft.

18. Method according to one of claims 1 to 17, wherein the at least one reversal point is a position reversal point.

19. Method, in which

- a control target (MOT) is monitored, wherein the control target (MOT) is controlled during operation by a servo drive control device (SRE), wherein the servo drive control device (SRE) is designed, on occurrence of a disturbance in the control target (MOT), to generate a compensation signal (K) on the basis of compensation parameters (P), in order to compensate for the disturbance, wherein the disturbance occurs because of a friction effect and the friction effect occurs during operation at at least one reversal point of a servo-driven shaft of the control target (MOT, WZM), wherein
- during the monitoring a method according to one of claims 1 to 18 is executed in an event-triggered manner and/or at periodic time intervals, in order to determine optimised compensation parameters (P1*, P2*),
- the optimised compensation parameters (P1*, P2*) are compared with the compensation parameters (P),
- when a deviation exceeding a predefined value exists between the compensation parameters and the optimised compensation parameters (P1*, P2*) a warning is output.

**20.** Method according to claim 19, wherein the method is a wear-out analysis method, a maintenance procedure or a condition monitoring method.

**21.** Method according to claim 19 or 20, wherein when a deviation exceeding a predefined value exists between the compensation parameters and the optimised compensation parameters (P1*, P2*) the optimised compensation parameters (P1*, P2*) are accepted.

**22.** System comprising a servo drive control device (SRE), a control target (MOT, WZM) and an arithmetic unit (RE), wherein the control target (MOT, WZM) is controlled during operation by the servo drive control device (SRE), wherein at least one disturbance occurs during operation of the control target (MOT, WZM) because of a friction effect, wherein the friction effect occurs during operation at at least one reversal point of a servo-driven shaft of the control target (MOT, WZM), wherein the servo drive control device (SRE) is designed, on occurrence of the at least one disturbance, to generate a compensation signal, in order to compensate for the at least one disturbance, wherein the compensation signal is defined by compensation parameters, wherein the arithmetic unit (RE) is configured in order to execute a method according to one of claims 1 to 18 or a method according to one of claims 19 to 21.

**23.** System according to claim 22, wherein the servo drive control device (SRE) includes the arithmetic unit (RE).

**24.** Computer program, comprising commands which cause a system according to claim 22 or 23 to execute a method according to one of claims 1 to 18 or a method according to one of claims 19 to 21.

**25.** Computer-readable medium, on which the computer program (CP) according to claim 24 is stored.

**Revendications**

**1.** Procédé de détermination de paramètres (P1*) de compensation, dans lequel les paramètres (P1*) de compensation déterminent un signal (K1*) de compensation, dans lequel le signal (K1*) de compensation est prévu pour compenser au moins une perturbation, dans lequel la au moins une perturbation se produit dans le fonctionnement d'une cible (MOT, WZM) de réglage en raison d'un effet de frottement, dans lequel on règle la cible (MOT, WZM) de réglage en fonctionnement par un dispositif (SRE) de réglage de servocommande, dans lequel l'effet de frottement se produit en fonctionnement en au moins un point de rebroussement d'un axe asservi de la cible (MOT, WZM) de réglage, dans lequel le dispositif (SRE) de réglage de servocommande est agencé pour créer, lors de l'apparition de la au moins une perturbation, le signal (K1*) de compensation à l'aide du paramètre (P1*) de compensation, afin de réduire un écart à mettre au compte de la perturbation, **caractérisé en ce que**

- on se procure un premier ensemble (P1) de paramètres de test,
- le dispositif (SRE) de réglage de servocommande fait en sorte d'effectuer une opération de fonctionnement, dans laquelle la au moins une perturbation apparaît, dans lequel le dispositif (SRE) de réglage de servocommande crée, en effectuant l'opération de fonctionnement, un premier signal (K1) de compensation de test reposant sur le premier ensemble (P1) de paramètres de test et reçoit, comme message en retour, un premier signal (MS1) de mesure,
- on détermine un premier signal (eX(t)) de défaut à partir du premier signal (MS1) de mesure,
- on détermine les paramètres (P1*) de compensation au moyen d'un modèle (EM) de remplacement, dans lequel le modèle (EM) de remplacement représente des signaux de défaut par des signaux de compensation, et en utilisant le premier signal (eX(t)) de défaut.

**2.** Procédé suivant la revendication 1, dans lequel, lors de la détermination du premier signal (eX(t)) de défaut, on utilise des valeurs (v*(t)) de consigne, dans lequel on détermine les valeurs de consigne par l'opération de fonctionnement.

**3.** Procédé suivant la revendication 1 ou 2, dans lequel, pour la détermination des paramètres (P1*) de compensation, on minimise une différence entre une courbe de compensation et le premier signal (eX(t)) de défaut représenté par un signal de compensation sur le modèle (EM) de remplacement, dans lequel on utilise la courbe de compensation comme variable de minimisation.

**4.** Procédé suivant l'une des revendications 1 à 3, dans lequel le modèle (EM) de remplacement modélise le comportement du dispositif (SRE) de réglage de servocommande et la cible (MOT) de réglage.

**5.** Procédé suivant la revendication 4, dans lequel le modèle de remplacement est constitué sous la forme d'un modèle d'une boucle de réglage fermée, par exemple d'une boucle de réglage de palier.

**6.** Procédé suivant l'une des revendications 1 à 5, dans lequel le premier ensemble (P1) de paramètres de test est constitué de paramètres de compensation, qui sont tous égaux à zéro et l'opération de fonctionnement a lieu sans compensation.

7. Procédé suivant l'une des revendications 1 à 6, dans lequel en outre

    - on se procure un deuxième ensemble (P2) de paramètres de test,
    - le dispositif (SRE) de réglage de servocommande fait en sorte de répéter l'opération de fonctionnement, dans lequel le dispositif (SRE) de réglage de servocommande crée, lors de la répétition de l'opération de fonctionnement, un deuxième signal (K2) de compensation de test reposant sur le deuxième ensemble (P2) de paramètres de test et reçoit, comme message en retour, un deuxième signal (MS2) de mesure, le deuxième signal (K2) de compensation de test se distinguant du signal (K1) de compensation de test,
    - on détermine un deuxième signal de défaut à partir du deuxième signal (MS2) de mesure,
    - sur la base des signaux (K1, K2) de compensation de test, on détermine - comme entrée de test - et des signaux de défaut - comme sortie de test - un modèle ($G_{ident}$) de comportement de transposition, dans lequel le modèle ($G_{ident}$) de comportement de transposition représente des signaux de compensation par des signaux de défaut,
    - on détermine les paramètres (P2*) de compensation à l'aide du modèle ($G_{ident}$) de comportement de transposition.

8. Procédé suivant la revendication 7, dans lequel, lors de la détermination des paramètres (P2*) de compensation, à l'aide du modèle ($G_{ident}$) de comportement de transposition, on effectue une optimisation d'une valeur (J) de qualité, rapportée à un signal de défaut donné à l'avance et à un signal de défaut simulé, au moyen du modèle ($G_{ident}$) de comportement de transposition.

9. Procédé suivant la revendication 8, dans lequel on effectue l'optimisation, de préférence la minimisation, par variation de paramètres, lesquels paramètres déterminent un signal de compensation, lequel signal de compensation est utilisé comme entrée pour le modèle ($G_{ident}$) de comportement de transposition, afin de créer un signal de défaut simulé.

10. Procédé suivant la revendication 9, dans lequel on met en coïncidence l'optimisation du signal de défaut simulé avec le signal de défaut donné à l'avance.

11. Procédé suivant l'une des revendications 8 à 10, dans lequel le signal de défaut donné à l'avance est le premier signal de défaut.

12. Procédé suivant l'une des revendications 8 à 10, dans lequel le signal de défaut donné à l'avance est le deuxième signal de défaut.

13. Procédé suivant l'une des revendications 8 à 12, dans lequel on utilise une norme p avec $p \in \mathbb{R}$, $p \geq 1$ comme valeur (J) de qualité.

14. Procédé suivant l'une des revendications 7 à 13, dans lequel le deuxième ensemble (P2) de paramètres de test comprend les paramètres (P1*) de compensation déterminés à l'aide du modèle (EM) de remplacement en étant constitué, de préférence, des paramètres (P1*) de compensation déterminés à l'aide du modèle (EM) de remplacement.

15. Procédé suivant l'une des revendications 7 à 14, dans lequel le dispositif (SRE) de réglage de servocommande fait en sorte d'effectuer l'opération de fonctionnement une autre fois, dans lequel le dispositif (SRE) de réglage de servocommande crée un signal (K2*) de compensation sur la base des paramètres (P2*) de compensation déterminés à l'aide du modèle de comportement de transposition et reçoit, comme message en retour, un troisième signal (MS3) de mesure, dans lequel on détermine un troisième signal de défaut sur la base du troisième signal (MS3) de mesure, dans lequel on compare le premier, le deuxième et le troisième signal de défaut, afin de choisir les paramètres de compensation, qui donnent le signal de défaut le plus petit.

16. Procédé suivant l'une des revendications 1 à 15, dans lequel on détermine les paramètres de compensation en fonction de la position de l'axe de la cible de réglage.

17. Procédé suivant l'une des revendications 1 à 16, dans lequel l'axe est un axe d'avance ou un axe de rotation.

18. Procédé suivant l'une des revendications 1 à 17, dans lequel le au moins un point de rebroussement est un point de rebroussement de position.

19. Procédé, dans lequel

    - on contrôle une cible (MOT) de réglage, dans lequel on règle la cible (MOT) de réglage en fonctionnement par un dispositif (SRE) de réglage de servocommande, dans lequel le dispositif (SRE) de réglage de servocommande est agencé pour créer, à l'apparition d'une perturbation dans la cible (MOT) de réglage, un signal (K) de compensation, à l'aide de paramètres (P) de compensation, afin de compenser la perturbation, dans lequel la perturbation se produit en raison d'un effet de frottement et l'effet de frottement apparait en fonctionnement en au moins un point de rebroussement d'un axe asservi de la cible (MOT, WZM) de réglage, dans lequel
- pendant le contrôle, on effectue un procédé suivant l'une des revendications 1 à 18 déclenché par un événement ou dans des laps de temps périodiques, afin de déterminer des paramètres (P1*, P2*) de compensation optimisés,
- on compare les paramètres (P1*, P2*) de compensation optimisés aux paramètres (P) de compensation,
- en présence d'un écart dépassant une valeur définie à l'avance des paramètres de compensation aux paramètres (P1*, P2*) de compensation optimisés, on émet un avertissement.

20. Procédé suivant la revendication 19, dans lequel le procédé est un procédé d'analyse d'usure, un entretien ou un procédé de contrôle de condition.

21. Procédé suivant la revendication 19 ou 20, dans lequel, en présence d'un écart dépassant une valeur définie à l'avance des paramètres de compensation aux paramètres (P1*, P2*) de compensation optimisés, on prend les paramètres (P1*, P2*) de compensation optimisés.

22. Système comprenant un dispositif (SRE) de réglage de servocommande, une cible (MOT, WZM) de réglage et un dispositif (RE) informatique, dans lequel la cible (MOT, WZM) de réglage est réglée en fonctionnement par le dispositif (SRE) de réglage de servocommande, dans lequel, en fonctionnement du système (MOT, WZM) de réglage, au moins une perturbation se produit en raison d'un effet de frottement, dans lequel l'effet de frottement se produit en fonctionnement en au moins un point de rebroussement d'un axe asservi de la cible (MOT, WZM) de réglage, dans lequel le dispositif (SRE) de réglage de servocommande est agencé pour créer, à l'apparition de la au moins une perturbation, un signal de compensation, afin de compenser la au moins une perturbation, dans lequel le signal de compensation est défini par des paramètres de compensation, dans lequel le dispositif (RE) informatique est configuré pour exécuter un procédé suivant l'une des revendications 1 à 18 ou un procédé suivant l'une des revendications 19 à 21.

23. Système suivant la revendication 22, dans lequel le dispositif (SRE) de réglage de servocommande comprend le dispositif (RE) informatique.

24. Programme d'ordinateur, comprenant des instructions, qui font que le système suivant la revendication 22 ou 23 exécute un procédé suivant l'une des revendications 1 à 18 ou un procédé suivant l'une des revendications 19 à 21.

25. Support, déchiffrable par ordinateur, sur lequel le programme (CP) suivant la revendication 24 est mis en mémoire.

FIG 1

EP 4 275 099 B1

# FIG 2

# FIG 3

FIG 4

# FIG 5

eX(t)

vK(t)

LR

RZM

Kv

x(t)

# FIG 6

K(t)

e(t)

G$_{ident}$

# FIG 7

EP 4 275 099 B1

FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19841716 A1

- US 6865499 B2